# EUROPEAN PATENT SPECIFICATION

(11) **EP 3 106 812 B1**
(45) Date of publication and mention of the grant of the patent: **08.08.2018**
(21) Application number: 14882209.1
(22) Date of filing: 09.12.2014
(51) Int. Cl.: F27D 3/00, C21C 5/52, F27B 3/08, F27B 3/18, F27D 13/00, F27D 17/00

(54) **RAW MATERIAL CONVEYANCING BUCKET, PRE-HEATING DEVICE, MELTING EQUIPMENT, AND OPERATION METHOD FOR MELTING EQUIPMENT**
FÖRDEREIMER FÜR ROHMATERIAL, VORWÄRMVORRICHTUNG, SCHMELZANLAGE UND BETRIEBSVERFAHREN FÜR SCHMELZANLAGE
BENNE DE TRANSPORT DE MATIÈRE PREMIÈRE, DISPOSITIF DE PRÉCHAUFFAGE, ÉQUIPEMENT DE FUSION ET PROCÉDÉ DE FONCTIONNEMENT D'UN ÉQUIPEMENT DE FUSION

(30) Priority: 14.02.2014 JP 2014026455
(43) Date of publication of application: 21.12.2016
(73) Proprietor: JP Steel Plantech Co., Kouhoku-ku Yokohama-shi Kanagawa 222-0033 (JP)
(72) Inventor: KATO, Hirotake, Yokohama-shi Kanagawa 222-0033 (JP); SATO, Yasuhiro, Yokohama-shi Kanagawa 222-0033 (JP); NISHINO, Akio, Yokohama-shi Kanagawa 222-003 (JP); SEKIGUCHI, Takeshi, Yokohama-shi Kanagawa 222-0033 (JP); MORITA, Akihiko, Yokohama-shi, Kanagawa 222-0033 (JP); AO, Norio, Yokohama-shi Kanagawa 222-0033 (JP)
(74) Representative: Hoffmann Eitle
(86) International application number: PCT/JP2014/082529
(87) International publication number: WO 2015/122086

(56) References cited:
- WO-A1-2013/132306
- DE-A1- 19 900 123
- GB-A- 2 078 916
- JP-A- H09 240 983
- JP-A- H09 240 983
- JP-A- H10 339 582
- JP-A- H10 339 582
- JP-A- 2001 033 171
- JP-A- 2002 019 882
- JP-U- S60 165 800
- JP-U- S60 165 800

## Description

### Technical Field

The present invention relates to a material conveying bucket for use in a melting facility for melting raw material such as scrap iron, and relates to a preheater, a melting facility including the material conveying bucket and the preheater, and a method of operating the melting facility.

### Background Art

A melting furnace such as an electric arc furnace is a facility that is mainly used to melt solid metal material after charging the solid metal material into the furnace. In the case of a steel-making electric arc furnace, which is a typical melting furnace, scrap iron, direct-reduced iron (DRI), hot briquetted iron (HBI) obtained by compacting the DRI at a high temperature, cold pig iron, etc. are used as raw material. These materials are melted by inserting an electrode or electrodes into the furnace and energizing the electrode(s).

Such a melting furnace uses a large amount of electric power to melt raw material. In a melting furnace, however, about 15 to 25 % of all the heat input by electric power, oxygen burner, etc. is discharged in the form of sensible heat of exhaust gas.

For this reason, various methods for minimizing the required electric power have been proposed, in which scrap is preheated with the use of the gas generated in a furnace during melting the scrap.

For example, Japanese Patent Application Publication JP 2001-033171 A describes a melting facility including a melting chamber for melting cold source iron (raw material) such as scrap with the use of electric arcs, and a preheating shaft (preheating chamber) that is directly connected to an upper portion of the melting chamber, the melting facility being configured to melt the cold source iron in the melting chamber by the electric arcs while the cold source iron is continuously or intermittently supplied to the preheating shaft so as to maintain a state where the cold source iron exists continuously between the preheating shaft and the melting chamber.

In this melting facility, an upper portion of the preheating shaft is provided with a material supply opening and an exhaust port. The gas generated in the melting chamber passes through the preheating shaft and is discharged from the exhaust port, so that the cold source iron in the preheating shaft is preheated by the gas. The material supply opening is configured to be opened and closed by opening/closing gates. When raw material is supplied, the raw material is supplied via a material conveying bucket with the opening/closing gate open. The material conveying bucket is provided with a top cover and a bottom lid. The top cover is opened when the raw material is filled into the material conveying bucket. The bottom lid is opened when the raw material therein is discharged.

The melting facility is configured to ensure gas tightness as much as possible by closing the material supply opening with the opening/closing gate except when the material is supplied, so that outflow of gas and dust from the preheating shaft and reduction in preheating efficiency are minimized.

In the case of the melting facility described in Patent Document 1, however, when cold source iron as raw material is supplied from the material conveying bucket into the preheating shaft, the opening/closing gate is opened and therefore, the gas tightness of the preheating shaft cannot be maintained. That is, gas tightness cannot be maintained while raw material is supplied.

In contrast, Japanese Patent Application Publication JP H10-339582 A describes a melting facility, in which raw material is charged into a preheating chamber in a state where a furnace top hopper provided at the top of a preheating chamber is tightly closed by a bucket. This makes it possible to ensure gas tightness while raw material is supplied.

GB 2 078 916 A discloses a container for conveying material such as reduced iron from a furnace to other plant in which the entrance of air into the container during use is minimized comprises a closed bottomed vessel with a single charge/discharge opening therein, said vessel being adapted to be rotated between an upright charge condition and an inverted discharge condition, and having a tapered section in its upper portion which narrows towards said opening, and a charge/discharge value located in the opening whereby material can either be charged into the vessel while in its upright condition, or discharged from the vessel while it its inverted condition. A blast port for purging the vessel with nitrogen or inert gas before charging the reduced material iron communicates with the interior of the vessel via a passage in one of the legs.

DE 199 00 123 A1 discloses a pre-heater device configured to prevent metal scrap in ducts from adhering and growing at the time of feeding or discharging. Metal scrap is fed into a preheating chamber by opening a door and preheated by introducing high temperature exhaust gas from a melting furnace through a channel into the preheating chamber. Subsequently, the exhaust gas is discharged through an exhaust gas duct, a first damper and a suction blower. When the channel is opened subsequently downward and metal scrap is led into the furnace, a second damper is closed, thus preventing a part of the metal scrap from being sucked into an exhaust gas duct. When the preheating chamber is loaded again with metal scrap, the first damper is closed while the second damper is opened, thus preventing a part of the metal scrap from being sucked into the duct.

WO 2013/132306 A1 discloses an apparatus to feed and pre-heat a metal charge to a melting furnace of a steelworks comprises a feeding and pre-heating tower separate from the melting furnace provided with at least one compartment to temporarily contain said metal charge, transfer means to transfer said metal charge to said melting furnace and conveying means to convey the fumes exiting from the melting furnace to said compartment. The apparatus also comprises a post-combustion chamber, disposed adjacent to and below said compartment, and connected on one side to said compartment and on another side to said conveying means, the post-combustion chamber being configured to determine the expansion of the fumes introduced by the conveying means and to direct said expanded fumes toward said compartment along a path such as to determine a desired residence time of said fumes suitable to obtain at least the substantial complete combustion of the unburned gases present in said fumes.

### Summary of Invention

In such a material conveying bucket, it is desired that the top cover and the bottom lid be opened as easily as possible. In addition, a preheater is desired that can ensure gas tightness while raw material is charged via such a material conveying bucket. In Patent Document 2, however, details of mechanism for opening and closing the top cover and the bottom lid of the material conveying bucket and operation thereof are not described.

An object of the present invention is to provide a material conveying bucket, with which it is possible to open and close the top cover and the bottom lid with simple mechanism through easy operation.

Another object of the present invention is to provide a melting facility including such a material conveying bucket and a preheater, and a method of operating such a melting facility.

A material conveying bucket according to the present invention is defined by claim 1. A melting facility according to the present invention is defined by claim 11. A method of operating the melting facility according to the present invention is defined by claim 14. Dependent claims relate to preferred embodiments.

Specifically, the present disclosure devices the following items (1) to (21).
(1) A material conveying bucket for conveying raw material to be melted in a melting furnace to a preheater in a state where the material conveying bucket is hung by a crane, the preheater being configured to preheat the raw material, by heat generated in the melting furnace, before the raw material is melted in the melting furnace, the material conveying bucket including:
   a container portion having: a container for containing the raw material, the container having an upper opening and a bottom opening; a top cover configured to open and close the upper opening; and a bottom lid configured to open and close the bottom opening;
   a handle portion to be hung by the crane; and
   a link mechanism that is connected to the top cover and the bottom lid and that connects the handle portion to the container portion so that the handle portion can move relative to the container portion, the link mechanism having a function of opening and closing the top cover when a first relative movement of the handle portion relative to the container portion is caused and a function of opening and closing the bottom lid when a second relative movement of the handle portion relative to the container portion is caused, the second relative movement being different in direction from the first relative movement.
(2) The material conveying bucket according to the above item (1), characterized in that the first relative movement is pivotal movement about a pivot shaft provided in the link mechanism.
(3) The material conveying bucket according to the above item (1) or (2), characterized in that the second relative movement is vertical translational movement.
(4) The material conveying bucket according to any one of the above items (1) to (3), characterized in that the link mechanism has a link unit having: a main link member directly connected to the handle portion; a first connection member connecting between the main link member and the top cover; and a second connection member connecting between the main link member and the bottom lid.
(5) The material conveying bucket according to the above item (4), characterized in that:
   a horizontal cross section of the container portion has a rectangular shape;
   the link unit is provided on an outer surface of each of two opposite sides of the container portion;
   the bottom lid has double doors configured to open downward; and
   the link unit has the two second connection members individually connecting between the main link member and the double doors.
(6) The material conveying bucket according to any one of the above items (1) to (5), characterized by being configured so that the top cover is opened by causing the first relative movement of the handle portion relative to the container portion by lowering the crane when the material conveying bucket is placed on a seat at a material filling position, at which the raw material is filled into the material conveying bucket.
(7) The material conveying bucket according to any one of the above items (1) to (6), characterized in that the top cover has a pressure regulating valve for reducing inner pressure of the container portion when pressure in the container portion rises abruptly.
(8) The material conveying bucket according to any one of the above items (1) to (7), characterized in that:
   the container portion has a bucket-side engagement portion provided at a position such that opening and closing of the bottom lid is not hindered, the bucket-side engagement portion having a strength enough to withstand a load exerted by the material conveying bucket filled with the raw material; and
   the material conveying bucket is configured so that the bottom lid is opened and the raw material in the material conveying bucket is thus discharged by causing the second relative movement of the handle portion relative to the container portion by lowering the crane while the material conveying bucket is placed on the preheater in a state where the bucket-side engagement portion is engaged with the preheater.
(9) The material conveying bucket according to the above item (8), characterized in that the bucket-side engagement portion has a flange portion provided all around the container portion.
(10) The material conveying bucket according to the above item (9), characterized in that the bucket-side engagement portion further has a sealing member, provided on a bottom surface of the flange portion, for maintaining gas tightness between the preheater and the container portion.
(11) The material conveying bucket according to any one of the above items (8) to (10), characterized in that the bucket-side engagement portion is provided at a lower end portion of the container portion.
(12) The material conveying bucket according to any one of the above items (1) to (11), characterized in that the container portion has an inlet for injecting inert gas into the container to displace air in the container by the inert gas.
(13) A preheater, into which raw material is charged from the material conveying bucket according to any one of the above items (1) to (12), the preheater being configured to preheat the raw material to be melted by the melting furnace, by heat generated in the melting furnace, before the raw material is melted in the melting furnace, and being characterized by including:
   a body portion, into which the raw material is charged;
   an exhaust port, provided in a side of the body portion, for discharging, from the body portion, gas that has been introduced from the melting furnace and that has preheated the raw material in the body portion;
   a gate, provided in an upper portion of the body portion, for opening and closing a charging opening, through which the raw material is charged from the material conveying bucket into the body portion; and
   a connection portion having a side wall that inhibits gas from flowing between an outside and a space between the material conveying bucket and the charging opening while the material conveying bucket is placed at a charging position, at which the raw material is charged into the body portion.
(14) A preheater, into which raw material is charged from the material conveying bucket according to any one of the above items (8) to (12), the preheater being configured to preheat the raw material to be melted by the melting furnace, by heat generated in the melting furnace, before the raw material is melted in the melting furnace, and being characterized by including:
   a body portion, into which the raw material is charged;
   an exhaust port, provided in a side of the body portion, for discharging, from the body portion, gas that has been introduced from the melting furnace and that has preheated the raw material in the body portion;
   a gate, provided in an upper portion of the body portion, for opening and closing a charging opening, through which the raw material is charged from the material conveying bucket into the body portion; and
   a connection portion having a side wall that inhibits gas from flowing between an outside and a space between the material conveying bucket and the charging opening while the material conveying bucket is placed at a charging position, at which the raw material is charged into the body portion, wherein
   the side wall of the connection portion is provided all around the charging opening so as to surround the charging opening.
(15) The preheater according to the above item (14), characterized by further including a preheater-side engagement portion, provided on the connection portion, that is configured to be engaged with the bucket-side engagement portion of the material conveying bucket and has a strength enough to withstand a load exerted by the material conveying bucket filled with the raw material.
(16) The preheater according to the above item (15), characterized in that a sealing member for maintaining gas tightness between the preheater and the container portion is provided on an upper surface of the preheater-side engagement portion.
(17) A melting facility characterized by including:
   a melting furnace for melting raw material;
   a preheater configured to preheat the raw material to be melted by the melting furnace, by heat generated in the melting furnace, before the raw material is melted in the melting furnace; and
   a material conveying bucket for conveying the raw material to the preheater in a state where the material conveying bucket is hung by a crane, wherein
   the material conveying bucket has:
      a container portion having: a container for containing the raw material, the container having an upper opening and a bottom opening; a top cover configured to open and close the upper opening; and a bottom lid configured to open and close the bottom opening;
      a handle portion to be hung by the crane; and
      a link mechanism that is connected to the top cover and the bottom lid and that connects the handle portion to the container portion so that the handle portion can move relative to the container portion, the link mechanism having a function of opening and closing the top cover when a first relative movement of the handle portion relative to the container portion is caused and a function of opening and closing the bottom lid when a second relative movement of the handle portion relative to the container portion is caused, the second relative movement being different in direction from the first relative movement, and wherein
      the preheater has:
         a body portion, into which the raw material is charged;
         an exhaust port, provided in a side of the body portion, for discharging, from the body portion, gas that has been introduced from the melting furnace and that has preheated the raw material in the body portion;
         a gate, provided in an upper portion of the body portion, for opening and closing a charging opening, through which the raw material is charged from the material conveying bucket into the body portion; and
         a connection portion having a side wall that inhibits gas from flowing between an outside and a space between the material conveying bucket and the charging opening while the material conveying bucket is placed at a charging position, at which the raw material is charged into the body portion.
(18) The melting facility according to the above item (17), characterized in that
   one of the material conveying bucket and the preheater has a rotator that functions as a guiding device for positioning between the material conveying bucket and the preheater, and
   the other of the material conveying bucket and the preheater has a guide member having a contact surface, with which the rotator is brought into contact and on which the rotator rotates or slides, at a position corresponding to a position of the rotator, to which the rotator is brought when the material conveying bucket is placed in the charging position.
(19) The melting facility according to the above item (17), characterized in that:
   the container portion of the material conveying bucket has a bucket-side engagement portion provided at a position such that opening and closing of the bottom lid is not hindered, the bucket-side engagement portion having a strength enough to withstand a load exerted by the material conveying bucket filled with the raw material;
   the material conveying bucket is configured so that the bottom lid is opened and the raw material in the material conveying bucket is thus discharged by causing the second relative movement of the handle portion relative to the container portion while the material conveying bucket is placed on the preheater in a state where the bucket-side engagement portion is engaged with the preheater;
   the rotator is provided on the bucket-side engagement portion of the material conveying bucket at each of at least two of positions that are the farthest from a center of the material conveying bucket in horizontal direction;
   the guide member is provided on the connection portion of the preheater at each of positions corresponding to positions, to which the rotators are brought when the material conveying bucket is placed in the charging position; and
   the contact surfaces are inclined so as to horizontally converge in a downward direction.
(20) A method of operating the melting facility according to any one of the above items (17) to (19), the method being characterized by including:
   opening the top cover of the material conveying bucket by performing a first operation of the crane when the raw material is filled into the material conveying bucket;
   closing the top cover of the material conveying bucket containing the raw material by performing a second operation of the crane;
   opening the bottom lid of the material conveying bucket by performing a third operation of the crane when the raw material is charged from the material conveying bucket into the body portion of the preheater; and
   closing the bottom lid of the material conveying bucket, from which the raw material has been discharged, by performing a fourth operation of the crane.
(21) The method of operating the melting facility according to the above item (20), characterized in that
   each of the first operation and the third operation includes an operation of lowering the crane, and
   each of the second operation and the fourth operation includes an operation of raising the crane.

According to the present invention, with the use of the link mechanism, the top cover is opened and closed by causing the first relative movement of the handle portion relative to the container portion, and the bottom lid is opened and closed by causing the second relative movement of the handle portion relative to the container portion, the second relative movement being different in direction from the first relative movement. Accordingly, it is made possible to open and close the top cover and the bottom lid with simple mechanism through easy operation.

Moreover, the preheater is provided with the side wall that inhibits gas from flowing between the outside and the space between the material conveying bucket and the charging opening when the material conveying bucket is placed at a charging position, at which the raw material is charged into the body portion. Accordingly, it is possible to ensure gas tightness even while the raw material is charged from the material conveying bucket.

### Brief Description of Drawings

[FIG. 1] FIG. 1 is a sectional view showing a melting facility according to a first embodiment of the present invention.
[FIG. 2] FIG. 2 is a plan view showing the melting facility according to the first embodiment of the present invention.
[FIG. 3] FIG. 3 is a perspective view showing a preheater of the melting facility according to the first embodiment of the present invention.
[FIG. 4] FIG. 4 is a side view showing an example of a material conveying bucket of the melting facility according to the first embodiment of the present invention.
[FIG. 5] FIG. 5 is a sectional view showing a state where the material conveying bucket and the preheater are connected to each other.
[FIG. 6] FIG. 6 is a perspective view showing a state where a top cover of the material conveying bucket shown in FIG. 4 is opened.
[FIG. 7] FIG. 7 is a perspective view showing a state where a bottom lid of the material conveying bucket shown in FIG. 4 is opened.
[FIG. 8] FIG. 8 is a schematic plan view showing a state of the material conveying bucket hung by a crane when the material conveying bucket is placed on a connection portion of the preheater.
[FIG. 9] FIG. 9 is a side view showing a first modification of the material conveying bucket.
[FIG. 10] FIG. 10 is a diagram for explaining operation of the material conveying bucket shown FIG. 9.
[FIG. 11] FIG. 11 is a diagram for explaining operation of the material conveying bucket shown FIG. 9.
[FIG. 12] FIG. 12 is a side view showing a second modification of the material conveying bucket.
[FIG. 13] FIG. 13 is a diagram for explaining operation of the material conveying bucket shown FIG. 12.
[FIG. 14] FIG. 14 is a diagram for explaining operation of the material conveying bucket shown FIG. 12.
[FIG. 15] FIG. 15 is a sectional view showing a third modification of the material conveying bucket.

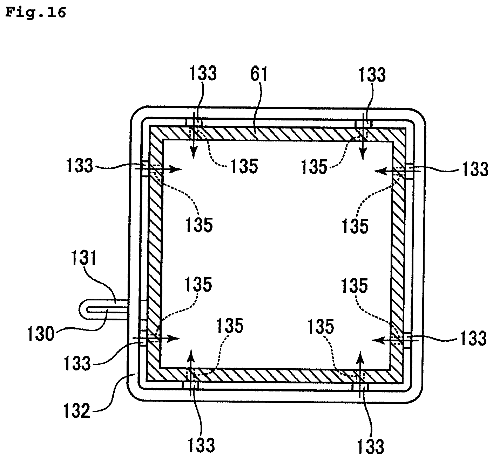

[FIG. 16] FIG. 16 is a schematic plan view of the material conveying bucket shown FIG. 15.
[FIG. 17] FIG. 17 is a side view showing a preheater and a material conveying bucket of a melting facility according to a second embodiment of the present invention.
[FIG. 18] FIG. 18 is a side view showing the preheater and the material conveying bucket of the melting facility according to the second embodiment of the present invention.

### Embodiments for Carrying Out the Invention

Embodiments of the present invention will be described below with reference to the attached drawings.

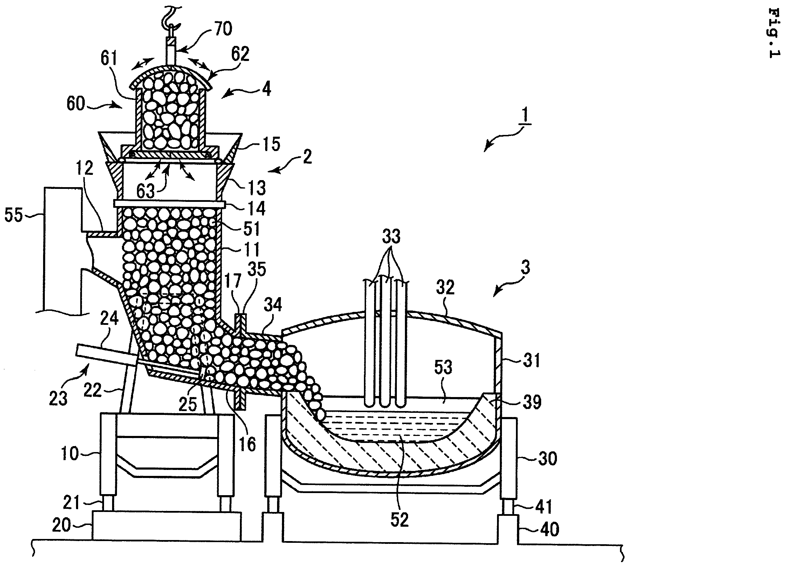

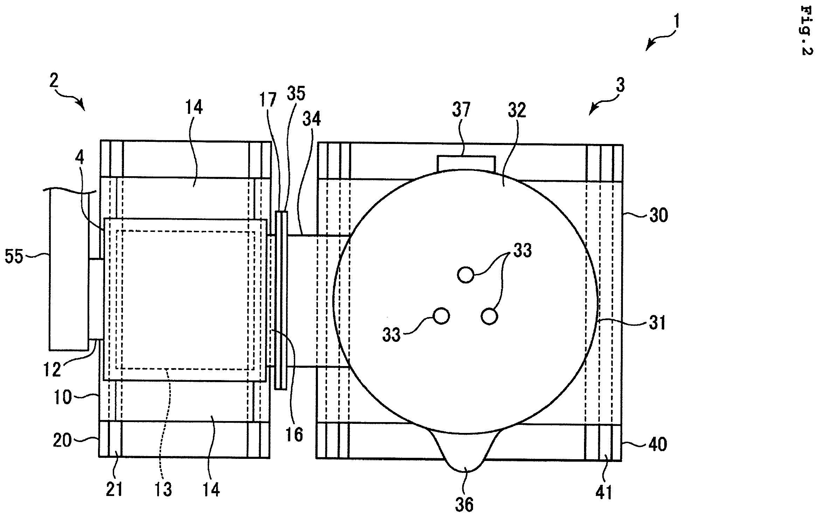

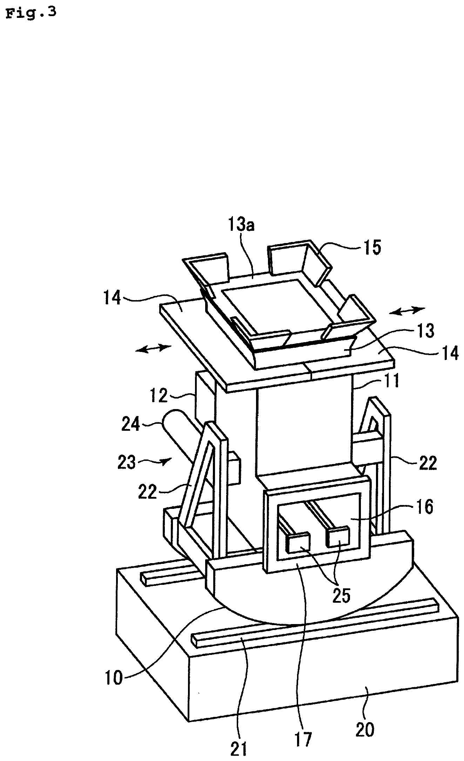

FIG. 1 is a sectional view showing a melting facility according to a first embodiment of the present invention, FIG. 2 is a plan view of the melting facility, and FIG. 3 is a perspective view of a preheater.

As shown in FIG. 1, the melting facility 1 includes: the preheater 2, in which raw material such as scrap iron to be melted in a melting furnace is preheated before the raw material is melted in the melting furnace; the melting furnace 3 for melting the raw material; and a material conveying bucket 4 for charging the raw material into the preheater 2. After the raw material is filled into the material conveying bucket 4, the material conveying bucket 4 is moved to a position over the preheater 2, and the raw material in the material conveying bucket 4 is charged into the preheater 2.

The preheater 2 includes: a body portion 11, into which the raw material is charged, the body portion 11 being supported by preheater bases 10 via support members 22 on a preheater foundation 20; an exhaust port 12, provided in a side of the body portion 11, for discharging, from the body portion 11, gas that has been introduced from the melting furnace and has preheated the raw material in the body portion 11; gates 14, provided in an upper portion of the body portion 11, for opening and closing a charging opening, through which the raw material is charged from the material conveying bucket 4 into the body portion 11; a connection portion 13 including side walls that inhibit gas from flowing between the outside and the space between the material conveying bucket 4 and the charging opening while the material conveying bucket 4 is placed at a charging position, at which the raw material is charged into the body portion 11; and guide members 15 provided at four corners on the connection portion 13.

The melting furnace 3 includes: a furnace body 31 for melting the raw material such as scrap iron by electric arcs, the furnace body 31 being supported by melting-furnace bases 30 on melting-furnace foundations 40; a furnace roof 32 that is placed over an upper opening of the furnace body 31 and can be opened and closed; three electrodes 33 that are vertically inserted into the furnace body 31 through the furnace roof 32 from above; and a material charging port 34, through which the raw material is charged into the furnace body 31, the material charging port 34 being provided in a side wall of the furnace body 31.

The material conveying bucket 4 includes a container portion 60, a handle portion 70, and a link mechanism (not shown in FIG. 1 and will be described in detail later). The container portion 60 includes: a container 61, whose horizontal cross section has a rectangular shape, the container 61 having an upper opening and a bottom opening; a top cover 62 for opening and closing the upper opening of the container 61; and a bottom lid 63 for opening and closing the bottom opening of the container 61. In this embodiment, the material conveying bucket 4 is configured to be gas-tightly engaged with the connection portion 13 of the preheater 2.

The body portion 11 of the preheater 2 has an iron shell and has a water-cooled structure. The exhaust port 12 connected to an exhaust gas duct 55 is for discharging the gas generated in the furnace body 31 of the melting furnace 3 into the outside of the body portion 11. The raw material in the preheater 2 is preheated by heat carried by the gas generated in the furnace body 31.

The two gates 14 for closing an upper opening of the body portion 11 are provided at a top portion of the body portion 11. The gates 14 each have a plate shape and are slidably provided. The upper opening of the body portion 11 is closed by the two gates 14 in a state where the two gates 14 are brought close to or in contact with each other at the center with respect to the body portion 11. The gates 14 are driven by driving mechanisms (not shown) and are caused to slide.

The raw material such as scrap iron is charged from the material conveying bucket 4 into the body portion 11 of the preheater 2. When the raw material is charged from the material conveying bucket 4 into the body portion 11, the material conveying bucket 4 that is in a state where the container 61 is filled with the raw material and the top cover 62 and the bottom lid 63 are closed, is guided by the guide members 15 as described later and is engaged with a seal engagement portion, which is formed at the top of the connection portion 13 of the preheater 2, in a close contact state, so that the space between the material conveying bucket 4 and the preheater 2 is tightly closed and the flow of gas through a gap between the material conveying bucket 4 and the preheater 2 is prevented. In this state, the gates 14 are positioned under the bottom lid 63 of the material conveying bucket 4. In a state where the flow of gas through opening of the connection portion 13 of the preheater 2 is prevented as described above, the gates 14 are opened and then the bottom lid 63 is opened, so that the raw material in the container 61 is charged into the body portion 11 of the preheater 2. This makes it possible to ensure gas tightness of the preheater 2 even while the raw material is charged.

The preheater 2 includes a pusher 23 that pushes out the raw material in the body portion 11 to the furnace body 31 of the melting furnace 3 through a material feeding port 16. The pusher 23 includes a cylinder 24 and a pushing member 25 provided at the tip of a piston of the cylinder 24 and is configured to push out the material in the body portion 11 into the melting furnace 3 via the pushing member 25 by pushing out the piston of the cylinder 24.

The material feeding port 16 of the preheater 2 is provided with a flange 17 and the material charging port 34 of the melting furnace 3 is provided with a flange 35. When the flanges 17 and 35 are joined together, the material feeding port 16 and the material charging port 34 are caused to face each other in a matching manner.

A tap hole 36 and a slag hole 37 are formed in the furnace body 31 of the melting furnace 3 at positions opposed to each other. The furnace body 31 has an iron shell having a water-cooled structure and has a refractory lining 39 at the bottom, molten metal storage portion. The melting furnace 3 is configured so that alternating voltage is applied to the electrodes 33 by a power source (not shown) and the electric arcs thereby formed melt the raw material supplied from the preheater 2 and heat the molten metal obtained by melting the raw material. Slag to be used for smelting is formed on the molten metal that is formed in the furnace body 31. In FIG. 1, reference numeral 51 indicates raw material such as scrap iron, reference numeral 52 indicates molten metal, and reference numeral 53 indicates slag. The tips of the electrodes 33 are positioned in the slag 53 and the electric arcs are formed in the slag 53.

Two preheater bases 10 are provided under the preheater 2 and each have a lower surface having an arc shape. The preheater bases 10 are placed on rails 21 laid on the preheater foundation 20, so that it is possible to tilt the preheater 2 by moving the preheater bases 10 on the rails 21 in a swinging manner via a driving mechanism (not shown) such as a cylinder. On the other hand, the melting-furnace bases 30 are constructed in a similar manner. That is, it is possible to tilt the melting furnace 3 by moving, in a swinging manner, the melting-furnace bases 30 on rails 41 laid on the melting-furnace foundations 40 via a driving mechanism (not shown) that is separate from that of the preheater 2.

As a result, when the melting furnace 3 is tilted to tap molten metal or slag, it is possible to tilt the preheater 2 synchronously, so that the state where the flange 17 of the material feeding port 16 in the preheater 2 and the flange 35 of the material charging port 34 in the melting furnace 3 are joined together is maintained and the gas tightness between the preheater 2 and the melting furnace 3 is therefore maintained even during tilting.

In this embodiment, the preheater 2 and the melting furnace 3 are provided on the separate foundations and are tilted by the separate driving mechanisms, so that it is possible to add the preheater 2 to an existing melting furnace.

Note that the preheater 2 and the melting furnace 3 may be provided in one body on the same foundation and the preheater 2 may be directly fixed to the melting furnace 3. In this case, there is no need to provide separate driving mechanisms.

Next, the material conveying bucket 4 will be described in detail.

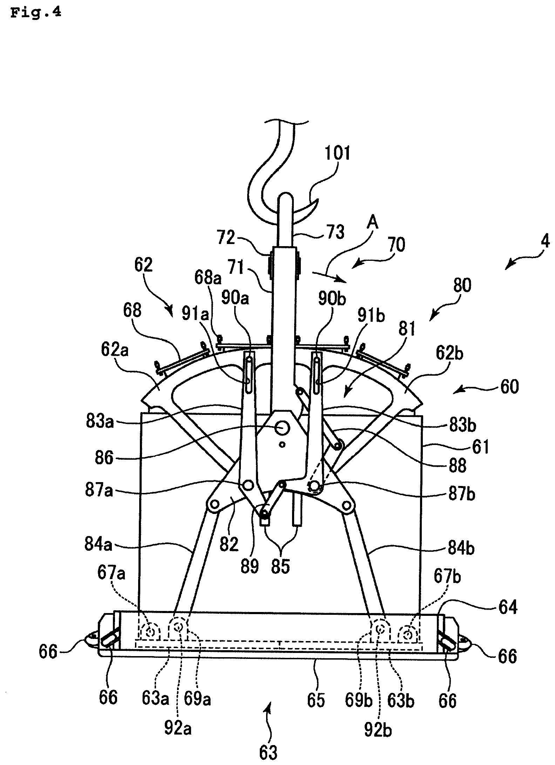

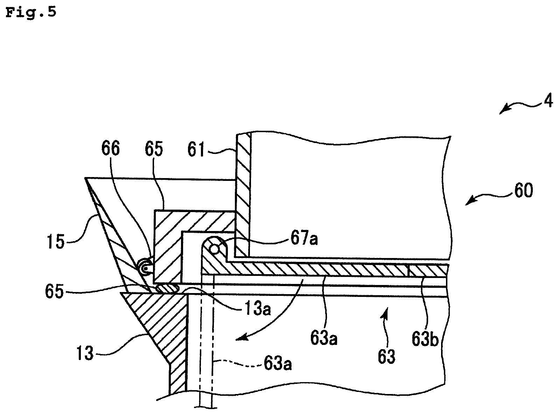

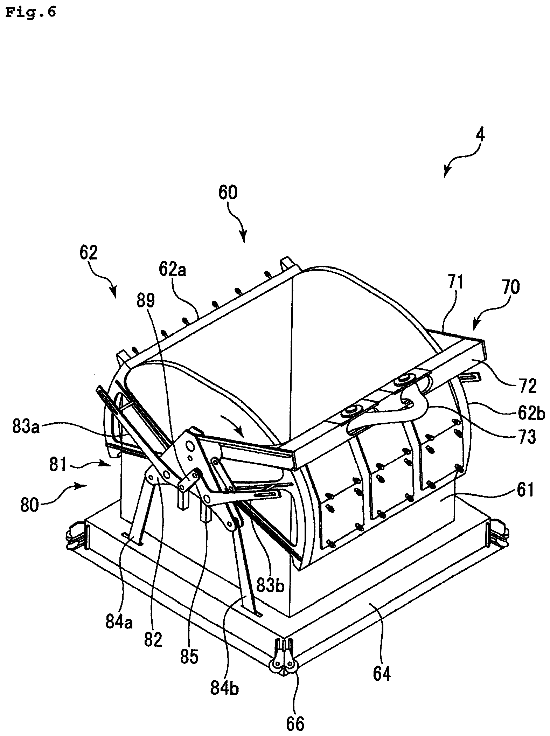

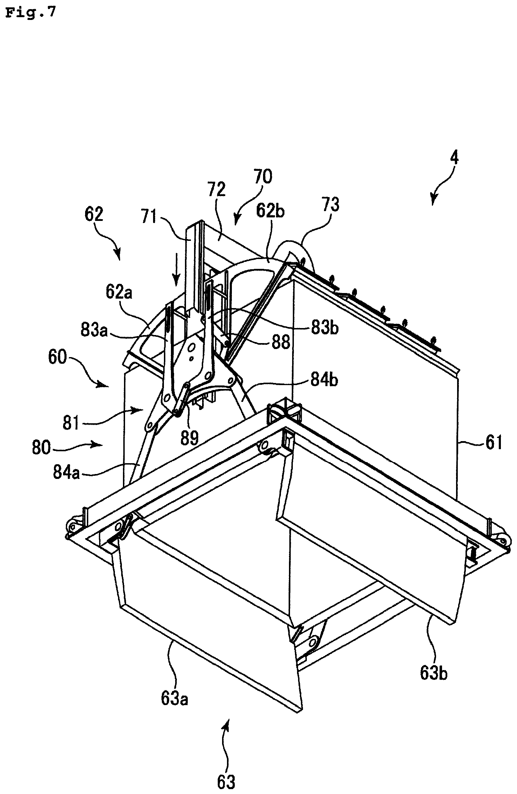

FIG. 4 is a side view showing an example of the material conveying bucket in a state where the top cover and the bottom lid are closed. FIG. 5 is a diagram showing a state where the material conveying bucket is placed on the preheater. FIGS. 6 and 7 are perspective views showing the material conveying bucket shown in FIG. 4. FIG. 6 shows a state where the top cover is opened and FIG. 7 shows a state where the bottom lid is opened.

The material conveying bucket 4 includes: the container portion 60 having the container 61, the top cover 62, and the bottom lid 63; the handle portion 70 to be hung by a hook 101 of a crane; and the link mechanism 80 configured to open and close the top cover 62 and the bottom lid 63 through operation via the handle portion 70.

The top cover 62 includes two cover members 62a and 62b each having an arc-shaped section. The two cover members 62a and 62b are each pivotally attached to the container 61 on two sides thereof opposed to each other via pivot shafts (not shown). When the two cover members 62a and 62b are brought close to or into contact with each other at the center, the upper opening is closed. When these members pivot outward, the upper opening is opened.

A plurality of subcovers 68 that function as pressure regulating valves are arranged on the upper side of each of the cover members 62a and 62b constituting the top cover 62. The subcovers 68 are pressed against the cover members 62a and 62b via springs 68a. When pressure in the container 61 rises and predominates over the spring force, the subcovers 68 are elevated to form gaps, thereby reducing the pressure in the container 61. The subcovers 68 make it possible to prevent the bucket 4 from being lifted and the facility from being damaged by a sudden increase in pressure in the container 61.

The bottom lid 63 includes double doors 63a and 63b. The doors 63a and 63b are pivotally attached to the container 61 via hinges 67a and 67b, which function as pivots, provided at the bottom of the container 61. When the two doors 63a and 63b are brought close to or into contact with each other at the center, the bottom opening is closed. When the two doors 63a and 63b pivot downward, the bottom opening is opened.

The container portion 60 has a frame-shaped flange portion 64 at a position such that opening and closing of the bottom lid 63 at the bottom of the container 61 is not hindered. The flange portion 64 has a strength enough to withstand the load exerted by the material conveying bucket 4 filled with the raw material. When the bottom lid 63 is closed, the bottom lid 63 is housed inside the flange portion 64. The flange portion 64 is provided all around a bottom portion of the container portion 60. However, even when the flange portion is partially absent around the bottom portion, a certain degree of inhibition of gas flow can be achieved. A sealing member 65 is provided on the bottom surface of the flange portion 64. The sealing member 65 is made of a thermally resistant and cushioning material, such as synthetic rubber. As shown in FIG. 5, when the material conveying bucket 4 is placed on the connection portion 13 of the preheater 2 and the sealing member 65 is brought into engagement with a seal engagement portion 13a that is formed at the top of the connection portion 13, the sealing member 65 is crushed to bring the material conveying bucket 4 and the preheater 2 into close contact with each other. The flange portion 64 and the sealing member 65 are included in a bucket-side engagement portion to be engaged with the preheater 2. Note that the bucket-side engagement portion may be made up of the flange portion 64 only, provided that the flange portion 64 itself is capable of bringing about close contact. Guide rollers 66 each functioning as a rotator of the present invention are provided on the outer side of the flange portion 64 at an angle such that the guide rollers 66 are guided by the inner surfaces of the guide members 15.

In this embodiment, one guide roller 66 is provided on each side at every four corners of the flange portion 64, so that a pair of guide rollers 66 are provided at each corner. The rotation axis of each of the guide rollers 66 is inclined with respect to the horizontal plane. Orientation of the inclination at each corner is such that the rotation axis is directed upward toward the corresponding corner of the flange portion 64.

The guide members 15 are provided on the connection portion 13 of the preheater 2 at positions corresponding to the positions, to which the guide rollers 66 are brought when the material conveying bucket 4 is placed in a charging position. The inner surfaces of the guide members 15 function as contact surfaces and are inclined so as to horizontally converge in the downward direction. Owing to this configuration, even when the material conveying bucket 4 is in a state of being slightly rotated from a predetermined position relative to the connection portion 13, as the crane is lowered, the guide rollers 66 abut the contact surfaces at upper portions of the guide members 15, the guide rollers 66 rotate or slide on the contact surfaces of the guide members 15, and the material conveying bucket 4 descends while being rotated to the direction of the predetermined position, so that the material conveying bucket 4 is guided to the predetermined position.

The seal engagement portion 13a of the connection portion 13 functions as a preheater-side engagement portion corresponding to the bucket-side engagement portion. The preheater-side engagement portion may be provided on the connection portion 13. The preheater-side engagement portion may be provided with a sealing member. The preheater-side engagement portion has a strength enough to withstand the load exerted by the material conveying bucket 4.

The handle portion 70 includes: a pair of vertical bars 71 that are provided on the two opposite sides of the container 61 so as to be able to ascend and descend and pivot via the link mechanism 80; a horizontal bar 72 that connects between the top portions of the vertical bars 71; and a hanger portion 73 to be hung by the hook 101 of the crane, the hanger portion 73 being provided at the center of the horizontal bar 72.

The link mechanism 80 includes a pair of link units 81 provided on the two opposite sides of the container 61. Each of the link units 81 includes: a main link member 82 that is directly connected to the handle portion 70 and is provided so as to be able to ascend and descend on a side of the container 61; two first connection members 83a and 83b that connect the main link member 82 to the two cover members 62a and 62b, respectively; and two second connection members 84a and 84b that connect the main link member 82 to the two doors 63a and 63b of the bottom lid 63, respectively.

The main link member 82 is configured to ascend and descend along rails 85 that are provided on the side of the container 61. The main link member 82 and the vertical bar 71 of the handle portion 70 are connected to each other via a pivot shaft 86, so that the handle portion 70 can pivot about the pivot shaft 86.

The first connection members 83a and 83b are connected to the main link member 82 via pivot shafts 87a and 87b, respectively. The vertical bar 71 of the handle portion 70 and the pivot shaft 87b of the main link member 82 are connected to each other via first sub-link members 88. The two first connection members 83a and 83b are connected to each other via a second sub-link member 89.

The two cover members 62a and 62b included in the top cover 62 are provided with guide pins 90a and guide pins 90b, respectively, on two sides thereof at positions corresponding to the positions of the first connection members 83a and 83b. Slots 91a and 91b are provided in the first connection members 83a and 83b, respectively, at upper portions thereof. The guide pins 90a and 90b are inserted in the slots 91a and 91b, respectively.

As shown in FIG. 4, the top cover is closed when the vertical bars 71 of the handle portion 70 are in a vertical position. When the handle portion 70 is pivoted in the direction indicated by the arrow A, that is, in the downward direction, relative to the container portion 60 (first relative movement is caused), the first connection members 83b are pivoted outward via the first sub-link members 88 and the pivot shafts 87b, and the first connection members 83a are pivoted outward via the second sub-link members 89, which causes the two cover members 62a and 62b of the top cover 62 to pivot outward via the guide pins 90a and 90b, so that the top cover 62 is opened as shown in FIG. 6. In order to close the top cover 62 from this state, the handle portion 70 is caused to pivot upward.

The lower ends of the second connection members 84a and 84b are connected to connection portions 69a and 69b of the two doors 63a and 63b of the bottom lid 63 via shafts 92a and 92b. As shown in FIG. 4, when the handle portion 70 is hung by the crane, the main link members 82 are positioned on top portions of the rails 85. In this state, the doors 63a and 63b of the bottom lid 63 are pulled upward by the second connection members 84a and 84b and the bottom lid 63 is therefore closed. From this state, the material conveying bucket 4 is placed on the connection portion 13 of the preheater 2 by the crane to bring the sealing member 65 into engagement with the seal engagement portion 13a. As shown in FIG. 7, when the handle portion 70 is caused to descend relative to the container portion 60 (second relative movement is caused) in a state where the load exerted by the material conveying bucket 4 is borne by the preheater 2 (that is, in a state where upward pulling force exerted by the crane is zero), the main link members 82 are caused to descend along the rails 85, which causes the doors 63a and 63b to open downward via the second connection members 84a and 84b. In this state, the doors 63a and 63b of the bottom lid 63 are inserted into the connection portion 13 as shown by the chain double dashed line in FIG. 5. When the bottom lid 63 is opened in this way, the raw material in the container 61 is charged into the body portion 11 of the preheater 2. In order to bring the bottom lid 63 from an open state to a closed state, it suffices that the handle portion 70 is caused to ascend to inversely operate.

Next, operation of the melting facility 1 configured as described above will be described.

The raw material 51 such as scrap iron is charged from the material conveying bucket into the body portion 11 of the preheater 2 to bring about a state where the raw material 51 exists continuously from the body portion 11 to the furnace body 31.

In this state; the electrodes 33 and the raw material 51 in the furnace body 31 are energized to form electric arcs to melt the raw material 51. When the melting process of the raw material 51 in the furnace body 31 progresses to form a certain amount of the molten metal 52 in the furnace body 31, the slag 53 is formed on the molten metal surface to shift to a slag-forming operation by blowing coke as supplemental heat source from a lance (not shown) into the slag 53 and the tips of the electrodes 33 are thrusted into the slag 53, so that the electric arcs are formed in the slag 53.

The gas generated by melting the raw material is discharged from the furnace body 31 into the duct 55 through the exhaust port 12 via the body portion 11 of the preheater 2 and heat carried by the gas preheats the raw material 51 in the body portion 11.

As the raw material 51 is melted in the furnace body 31, the raw material 51 in the body portion 11 of the preheater 2 is supplied to the furnace body 31, so that it is possible to continuously melt the raw material 51 in the furnace body 31. In order to assist the supply of the raw material 51 into the furnace body 31, the raw material 51 in the body portion 11 of the preheater 2 is pushed out into the furnace body 31 via the pusher 23.

As the raw material 51 in the body portion 11 is supplied to the furnace body 31, the level of the top of the raw material 51 in the body portion 11 descends. For this reason, in order to maintain the state where the raw material 51 exists continuously between the body portion 11 and the furnace body 31, the raw material 51 is supplied into the body portion 11 through the connection portion 13 via the material conveying bucket 4 at appropriate times.

When the raw material 51 is continuously melted in this way and a certain amount (the amount corresponding to that obtained by one batch, for example) of molten metal is thus formed in the furnace body 31, the melting furnace 3 is tilted to the slag hole 37 side to discharge the slag through the slag hole 37 while maintaining the state where the raw material 51 exists continuously in the body portion 11 of the preheater 2. Thereafter, the melting furnace 3 is tilted to the opposite side, that is, the tap hole 36 side, to tap molten metal into a ladle or the like through the tap hole 36.

The state where the flange 17 of the material feeding port 16 and the flange 35 of the material charging port 34 are joined together is maintained by synchronously tilting the preheater 2 and the melting furnace 3, so that gas tightness between the preheater 2 and the melting furnace 3 is maintained. As a result, it is possible to keep a high efficiency in preheating the raw material. Moreover, since the preheater 2 and the melting furnace 3 are separately provided, it is possible to provide an existing melting furnace with a preheater.

Note that when the preheater 2 and the melting furnace 3 are provided in one body, no problem arises with the gas tightness between the preheater 2 and the melting furnace 3.

During this series of steps, the raw material such as scrap iron is supplied to the preheater 2 by the material conveying bucket 4 by an example operating method according to the present invention as described below, for example.

First, the material conveying bucket 4 is hung by the crane and placed on a seat such as a carriage that is positioned at a material filling position, at which the raw material such as scrap iron is filled into the material conveying bucket 4. It is preferable that the upper surface of the seat have an area that is equal to or smaller than the area of the container portion 60 of the material conveying bucket 4 so that only the bottom lid 63 comes into contact with the seat when the material conveying bucket 4 is placed on the seat. This makes it possible to fill the raw material into the material conveying bucket 4 in a state where the bottom lid 63 is tightly closed and it is also made possible to prevent the flange portion 64 and the guide rollers 66 from being damaged. In this state, the top cover 62 and the bottom lid 63 of the container portion 60 of the material conveying bucket 4 are closed.

In this state, the handle portion 70 is pivoted from a vertical position in the direction indicated by the arrow A shown in FIG. 4, that is, in the downward direction, relative to the container portion 60 (first relative movement is caused) by performing an operation of lowering the crane (first operation). This causes the link mechanism 80 to open the top cover 62. Specifically, as shown in FIG. 6, pivoting the handle portion 70 in the direction indicated by the arrow A, that is, in the downward direction causes, on one hand, the first connection members 83b to be pivoted outward via the first sub-link members 88, which causes the cover member 62b to be opened via the guide pins 90b inserted in the slots 91b of the first connection members 83b. On the other hand, the first connection members 83a are also pivoted outward via the second sub-link members 89, which causes the cover member 62a to be opened via the guide pins 90a inserted in the slots 91a of the first connection members 83a. In this state, the raw material is filled into the container 61 from above.

After the raw material is filled, the handle portion 70 is pivoted in the upward direction relative to the container portion 60 (first relative movement is caused) by performing an operation of raising the crane (second operation), so that the vertical bars 71 are returned to the vertical position to close the top cover 62. The material conveying bucket 4 is then moved to the position over the preheater 2 and is lowered in a state where the material conveying bucket 4 containing the raw material is hung by the crane. In this way, the material conveying bucket 4 is placed on the connection portion 13 of the preheater 2. In this operation, the operation of lowering the crane is stopped at a height such that the material conveying bucket 4 is in contact with the connection portion 13 but the load of the material conveying bucket 4 is not completely borne by the connection portion 13 of the preheater 2.

Then, the gates 14 are opened as a preparation to supply the raw material from the material conveying bucket 4 into the body portion 11 of the preheater 2. Except while the raw material 51 is supplied into the body portion 11 of the preheater 2, the gates 14 are closed to maintain gas tightness of the preheater 2. Although the gates 14 are opened while the raw material is supplied, the sealing member 65 on the flange portion 64 provided at the bottom portion of the container portion 60 is brought into engagement with the seal engagement portion 13a formed at the top of the connection portion 13 to bring the material conveying bucket 4 and the preheater 2 into close contact with each other when the material conveying bucket 4 is placed on the connection portion 13 of the preheater 2. This makes it possible to maintain gas tightness of the preheater 2 even while the gates 14 are opened to charge the raw material.

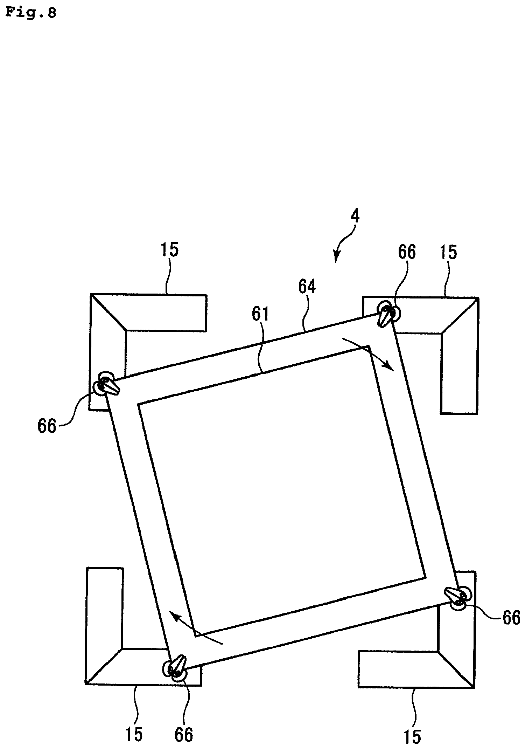

There is a possibility that when the material conveying bucket 4 is placed on the connection portion 13 of the preheater 2 with the material conveying bucket 4 hung by the crane, the material conveying bucket 4 is lowered in a state where the material conveying bucket 4 is slightly rotated from a predetermined position as shown in FIG. 8. However, even when the material conveying bucket 4 is in such a rotated state, the material conveying bucket 4 is rotated and positioned to the predetermined position by the guide rollers 66 during descent of the material conveying bucket 4 because the guide rollers 66 are provided at the four corners of the flange portion 64 so that the rotation axes of the guide rollers 66 are inclined so as to cause the guide rollers 66 to be guided by the inner surfaces of the guide members 15 as described above. Note that the guide members may be provided on the material conveying bucket 4 side and the guide rollers may be provided on the preheater side.

When the gates 14 are fully opened, an operation of further lowering the crane in the vertical direction (third operation) is performed to lower the handle portion 70 relative to the container portion 60 (second relative movement is caused), so that the bottom lid 63 is opened to charge the raw material in the material conveying bucket 4 into the body portion 11 of the preheater 2. Specifically, as shown in FIG. 7, vertically lowering the crane causes the handle portion 70 to be lowered and therefore causes the main link members 82 to be lowered along the rails 85, which in turn causes the second connection members 84a and 84b to be lowered to pivot the doors 63a and 63b downward. When the bottom lid 63 is opened in this way, the raw material in the material conveying bucket 4 is charged into the body portion 11 of the preheater 2.

After charging of the raw material is finished, an operation of raising the crane (fourth operation) is performed to raise the handle portion 70 relative to the container portion 60 (second relative movement is caused), so that the bottom lid 63 is raised. After the bottom lid 63 is raised to a position not interfering with the gates 14, the gates 14 are closed. Specifically, raising the handle portion 70 causes the main link members 82 to be raised, which in turn causes the doors 63a and 63b to be pivoted upward via the second connection members 84a and 84b. Thereafter, the handle portion 70 is raised by the crane within a range in which a state is maintained where the material conveying bucket 4 is in contact with the connection portion 13, so that the bottom lid 63 is raised to the position not interfering with the gates 14. This enables the gates 14 to be closed and the gates 14 are therefore closed. Sealing by the material conveying bucket is no longer needed when the gates 14 are closed and therefore, the crane is further raised to raise the empty material conveying bucket 4, which is then moved to the material filling position.

As described above, according to the present embodiment, the top cover 62 and the bottom lid 63 of the material conveying bucket 4 are opened and closed via the link mechanism 80 by the pivoting and the raising and lowering of the handle portion 70 performed via the crane. As a result, it is made possible to open and close the top cover and the bottom lid with simple mechanism through easy operation.

When the raw material is charged from the material conveying bucket 4 into the body portion 11 of the preheater 2, the sealing member 65 on the flange portion 64 provided at the bottom portion of the container 61 is brought into engagement with the seal engagement portion 13a of the connection portion 13 to bring the sealing member 65 and the seal engagement portion 13a into close contact with each other to tightly close the space between the material conveying bucket 4 and the preheater 2. For this reason, it is possible, without complicated structure, to ensure gas tightness of the preheater 2 when the gates 14 are opened and therefore to prevent gas and dust in the body portion 11 from flowing out of the top portion of the preheater 2 while the raw material is charged. Moreover, the inflow of gas into the body portion 11 is prevented, so that it is possible to prevent reduction in preheating efficiency.

Note that charging the raw material from the material conveying bucket 4 into the body portion 11 of the preheater 2 can be performed only after the sealing member 65 around the flange portion 64 of the material conveying bucket 4 is brought into engagement with the seal engagement portion 13a of the connection portion 13 and the gates 14 are opened. For this reason, it is preferable that a mechanical or electrical interlock be provided so that the bottom lid 63 is not opened before the gates 14 are opened.

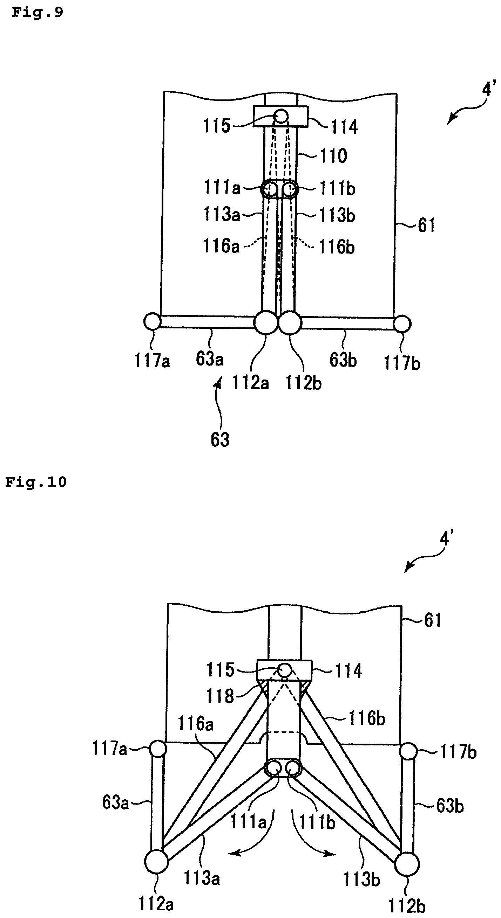

Next, a first modification of the material conveying bucket will be described. FIG. 9 is a side view showing the first modification of the material conveying bucket. A material conveying bucket 4' of the first modification differs from the material conveying bucket 4 shown in FIG. 4 in the mechanism for opening and closing the bottom lid 63.

The mechanism for opening and closing the top cover 62 of the material conveying bucket 4' has a link mechanism similar to that shown in FIG. 4. The link mechanism has a pair of link units provided on the two opposite sides of the container 61. Since the mechanism for opening and closing the top cover 62 in each of the link units is similar to that shown in FIG. 4, description of this mechanism will be omitted. Each of the link units of this modification has a main shaft 110 that can be raised and lowered relative to the container 61 by raising and lowering the handle portion 70. Two pivot shafts 111a and 111b are provided at the lower end of the main shaft 110, pivot shafts 112a and 112b are provided at the central portions of the doors 63a and 63b of the bottom lid 63, and two first link members 113a and 113b for opening and closing the bottom lid 63 are provided so as to connect between the pivot shaft 111a and the pivot shaft 112a and between the pivot shaft 111b and the pivot shaft 112b, respectively. A slider 114 is provided on the main shaft 110 so as to be able to ascend and descend along the main shaft 110. The slider 114 is provided with a pivot shaft 115. Two second link members 116a and 116b are provided so as to connect between the pivot shaft 115 and the two pivot shafts 112a and 112b, respectively. Note that the pivot shafts 112a and 112b have a diameter greater than the thickness of the doors 63a and 63b, so that the pivot shafts 112a and 112b protrude on the side of the bottom lid 63 facing the container 61. The protruding portions are configured to be engaged with lower end, side portions of the container 61 so as to bear the load of the container 61. Note that, in this modification, the doors 63a and 63b are pivotally supported by movable hinge portions 117a and 117b.

FIG. 9 shows a state where the raw material is contained in the container 61 of the material conveying bucket 4' and the top cover 62 (not shown) and the bottom lid 63 are closed. When the bucket 4' in this state is hung by the crane and placed on the connection portion 13 of the preheater 2, the sealing member 65 is brought into engagement with the seal engagement portion 13a of the connection portion 13 to bring the sealing member 65 and the seal engagement portion 13a into close contact with each other, so that the space between the material conveying bucket 4' and the preheater 2 is tightly closed and the flow of gas through a gap between the material conveying bucket 4' and the preheater 2 is therefore prevented. In the case of this modification, it is difficult to provide the bucket-side engagement portion such as the flange portion at the lower end portion of the material conveying bucket. For this reason, the height of the connection portion 13 may be set to a height such that half or more of the material conveying bucket in the vertical direction is covered, and the bucket-side engagement portion may be provided on the upper half portion of the material conveying bucket.

When the material conveying bucket 4' is placed on the connection portion 13 of the preheater 2 and the sealing member 65 and the seal engagement portion 13a are brought into close contact with each other to close the upper opening of the preheater 2, the gates 14 are opened. When the gates 14 are fully opened, the handle portion 70 (not shown in FIG. 9) is lowered by the crane to lower the main shafts 110, so that the doors 63a and 63b of the bottom lid 63 are opened via the first link members 113a and 113b as shown in FIG. 10 and the raw material is charged into the body portion 11 of the preheater 2 with gas tightness of the preheater 2 maintained. During this operation, the sliders 114 are moved to a higher position relative to the main shafts 110 via the second link members 116a and 116b as compared to the position shown in FIG. 9 and stoppers 118 retracted in the main shafts 110 open outward to stop the sliders 114. In this way, the doors 63a and 63b of the bottom lid 63 are locked in an open state by the second link members 116a and 116b.

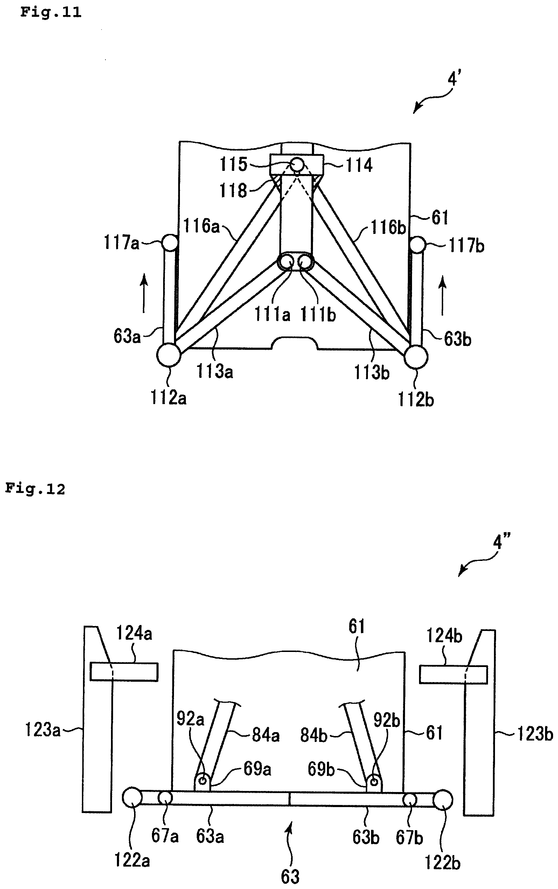

When the main shafts 110 are raised by the crane as shown in FIG. 11 with the material conveying bucket 4' being in close contact with the connection portion 13 of the preheater 2, the doors 63a and 63b of the bottom lid 63 are raised in an open state along the sides of the container 61, so that the whole of the bottom lid 63 is brought to a position higher than the position of the gates 14 that is in a closed state. The gates 14 are then closed. Accordingly, even when the raw material reaches the level immediately below the gates 14, occurrence of a situation where the raw material is caught by the doors 63a and 63b of the bottom lid 63 to make it impossible to close the bottom lid 63, is prevented. Moreover, occurrence of a situation where the bottom lid 63 hinders the gates 14 from being closed is also prevented. Accordingly, it is possible to set the position of the material conveying bucket 4 at the time of charging the raw material close to the gates 14, so that it is possible to minimize the height of the facility required to charge the raw material. Note that in the case of this modification, an operation of closing the bottom lid 63 to bring about the state shown in FIG. 9 has to be performed before the material conveying bucket is placed on the seat at the material filling position.

Next, a second modification of the material conveying bucket will be described. FIG. 12 is a side view showing the second modification of the material conveying bucket. The mechanism for opening and closing the top cover 62 of a material conveying bucket 4" of the second modification has a link mechanism similar to that shown in FIG. 4. The link mechanism has a pair of link units provided on the two opposite sides of the container 61. Since the mechanism for opening and closing the top cover 62 in each of the link units is similar to that shown in FIG. 4, description of this mechanism will be omitted. The material conveying bucket 4" has rollers 122a and 122b on the outer side of the hinges 67a and 67b of the doors 63a and 63b of the bottom lid 63, and roller guides 123a and 123b are provided at outer positions with respect to the rollers 122a and 122b so as to be capable of being moved closer to and apart from the side walls of the container 61. Note that reference numerals 124a and 124b indicate guides for moving the roller guides 123a and 123b.

FIG. 12 shows a state where the raw material is contained in the container 61 of the material conveying bucket 4" and the top cover 62 (not shown in FIG. 12) and the bottom lid 63 are closed. When the bucket 4" in this state is hung by the crane and placed on the connection portion 13 of the preheater 2 as in the case of the material conveying bucket 4 shown in FIG. 4, the sealing member 65 and the seal engagement portion 13a are brought into close contact with each other, so that the flow of gas through a gap between the material conveying bucket 4" and the preheater 2 is prevented.

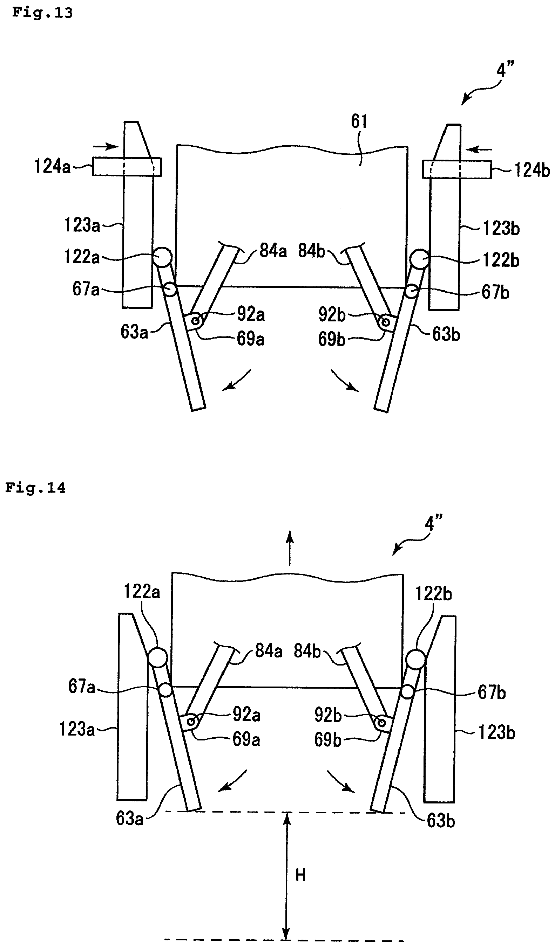

When the material conveying bucket 4" is brought into close contact with the connection portion 13 of the preheater 2 in this way and the gates 14 are fully opened with the upper opening of the preheater 2 closed, the doors 63a and 63b of the bottom lid 63 are opened via the second connection members 84a and 84b as shown in FIG. 13, so that the raw material in the material conveying bucket 4" is charged into the body portion 11 of the preheater 2 with gas tightness of the preheater 2 maintained. During this operation, opening the bottom lid 63 is performed by lowering the handle portion 70 by the crane as in the case of the material conveying bucket 4 shown in FIG. 4. Specifically, lowering the handle portion 70 causes the main link members 82 of the two link units 81 included in the link mechanism 80 to be lowered, which in turn causes the doors 63a and 63b to be opened via the second connection members 84a and 84b. Note that also in this modification, it is difficult to provide the bucket-side engagement portion such as the flange portion at the lower end portion of the material conveying bucket and therefore, the height of the connection portion 13 may be set to a height such that half or more of the material conveying bucket in the vertical direction is covered, and the bucket-side engagement portion may be provided on the upper half portion of the material conveying bucket.

Subsequently, the gates 14 are closed and the material conveying bucket 4" is raised by the crane. However, there is a possibility that the raw material is caught by the doors 63a and 63b of the bottom lid 63 to make it impossible to close the doors 63a and 63b when it is tried to close the bottom lid 63 in the case where the raw material reaches the level immediately below the gates 14. Moreover, it is also conceivable that raising the material conveying bucket 4" itself is hindered by caught raw material. For this reason, as shown in FIG. 13, the roller guides 123a and 123b are moved closer to the container 61 to keep the bottom lid 63 opened.

In this way, when the material conveying bucket 4" is raised, it is possible to raise the material conveying bucket 4" to a height H corresponding to the length of the roller guides 123a and 123b with the bottom lid 63 opened as shown in FIG. 14, so that it is possible to prevent the raw material from being caught by the doors 63a and 63b of the bottom lid 63.

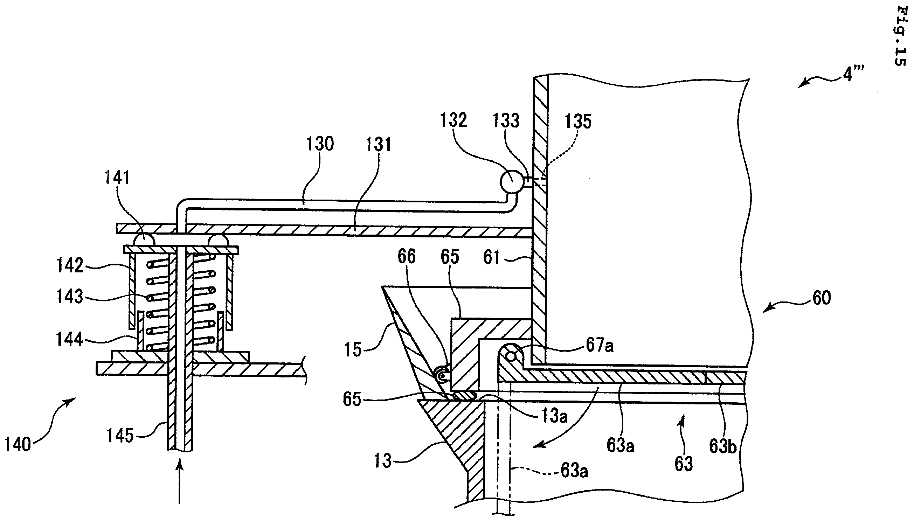

Next, a third modification of the material conveying bucket will be described. FIG. 15 is a sectional view showing the third modification of the material conveying bucket. A schematic plan view of the material conveying bucket shown in FIG. 15.

The container portion 60 of a material conveying bucket 4"' of this modification is provided with inlets 135 for injecting inert gas into the container 61 to displace air in the container by the inert gas. A main pipe 132 is connected to the inlets 135 via first connection pipes 133 and a second connection pipe 130 is connected to the main pipe 132. The second connection pipe 130 is supported by a support plate 131 that has a hole at a tip portion. The hole at the tip portion of the support plate 131 and the second connection pipe 130 communicate with each other.

The second connection pipe 130 is connected to a supply unit 140 and the inert gas is supplied into the material conveying bucket 4'" via the supply unit 140. In the modification shown in FIG. 15, the supply unit 140 is additionally provided to the preheater and is configured so that the supply unit 140 and the second connection pipe 130 are connected to each other when the material conveying bucket 4'" is placed on the preheater.

The supply unit 140 includes: a lower cylinder portion 144 provided on a base; and an upper cylinder portion 142 that is slidably fitted on the lower cylinder portion 144 and is urged upward by a spring 143 interposed between the base and the upper cylinder portion 142. One end of a supply pipe 145 is connected to the lower cylinder portion 144 and the other end of the supply pipe 145 is connected to a source of the inert gas. An injection hole, from which the inert gas is injected, is provided in a top plate portion of the upper cylinder portion 142 and a surrounding seal member 141 is provided on the upper surface of the top plate portion so as to surround the injection hole. When the material conveying bucket 4'" is placed on the preheater, the support plate 131 and the supply unit 140 are connected to each other so that the hole at the tip portion of the support plate 131 and the injection hole, from which the inert gas is injected, face each other.

In the modification shown in FIG. 15, the upper cylinder portion 142 is urged upward by the spring 143 and, when the support plate 131 is brought into contact with the surrounding seal member 141 and is further lowered, the surrounding seal member 141 is pressed against the support plate 131 by elastic force of the spring 143, so that the supply unit 140 and the second connection pipe 130 are connected to each other.

In this way, inert gas is supplied into the container 61 from the injection hole through the second connection pipe 130. Keeping the inside of the container 60 in an inert gas atmosphere makes it possible to suppress undesired reaction in the container 60.

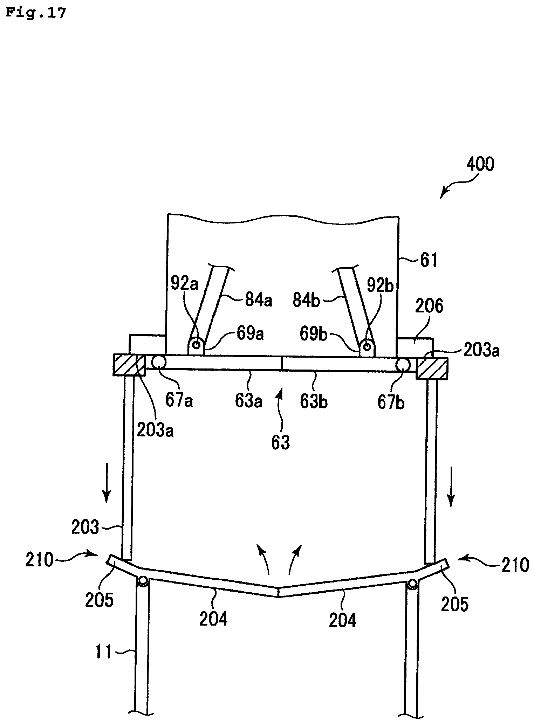

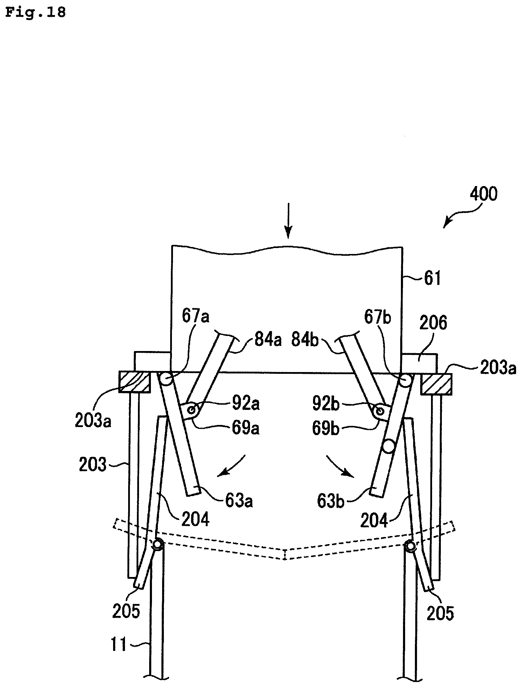

Next, a second embodiment will be described. FIGS. 17 and 18 are side views showing a preheater of a melting facility according to the second embodiment of the present invention. In the following description, features different from those of the first embodiment will mainly be described and redundant description will be omitted.

In the preheater of the melting facility according to the second embodiment, each of the gates includes an upward opening door 210 having a main gate portion 204 extending inward with respect to the body portion 11 of the preheater and a brim portion 205 extending from the main gate portion 204 outward with respect to the body portion 11, wherein the upward opening door 210 is configured so that the main gate portion 204 is opened upward when the brim portion 205 is pushed downward. The preheater of the second embodiment is provided with two upward opening doors 210, that is, has a double-door construction. A connection portion 203 is provided above the body portion 11. A seal engagement portion 203a is formed at the top of the connection portion 203. The connection portion 203 is configured so that, when a material conveying bucket 400 is placed on the seal engagement portion 203a of the connection portion 203, the connection portion 203 is lowered by the weight of the material conveying bucket 400 and pushes the brim portions 205 downward.

The material conveying bucket 400 according to the second embodiment is basically the same in configuration as the material conveying bucket 4 according to the first embodiment but differs therefrom in that the flange portion provided at the lower end portion functions as a pushing flange 206. In FIGS. 17 and 18, the elements the same as those of the material conveying bucket 4 are indicated by the same reference numerals and description thereof will be omitted.

In the material conveying bucket 400, as shown in FIG. 17, the lower surface of the pushing flange 206 provided around the bottom of the container 61 functions as a sealing portion, and the bottom lid 63 is closed when the material conveying bucket 400 is hung by the crane. When the material conveying bucket 400 is placed on the connection portion 203 by the crane to bring the pushing flange 206 into engagement with the seal engagement portion 203a and the weight of the material conveying bucket 400 is put on the connection portion 203 (that is, the upward pulling force exerted by the crane becomes zero), the connection portion 203 is lowered and pushes the brim portion 205 downward. When the upward pulling force exerted by the crane becomes zero and the crane is further lowered to lower the handle portion, the doors 63a and 63b are pivoted downward via the second connection members 84a and 84b, which are elements of the link mechanism, so that the bottom lid 63 is opened. This causes the doors 63a and 63b of the bottom lid 63 and part of the second connection members 84a and 84b to be inserted into the connection portion 203. As shown in FIG. 18, since the main gate portions 204 are upwardly opened by the connection portion 203 pushing the brim portions 205 downward, the raw material in the container 61 is charged into the body portion 11 by opening the bottom lid 63.

The present invention is not limited to the above-described embodiments and various modifications can be made. The scope of the present invention is determined based on the attached claims and all the configurations obtained by omitting, changing, and/or improving the constituent elements within the scope of the present invention are also included in the present invention.

For example, while the preheater has a rectangular horizontal cross section in the above embodiments, the horizontal cross section of the preheater may be circular. While the above-described embodiments are preferable embodiments, in which the preheater has a water-cooled structure, the water-cooled structure may be omitted. While the configuration, in which the gates have two leaves, has been described, the gate may be a single-leaf gate. While the configuration, in which two preheater bases are provided, has been described, the base may be a single base.

The configuration of the material conveying bucket is also not limited to those of the above-described embodiments and various modifications can be made. Forms of the seal engagement portion of the preheater and the periphery (sealing portion) of the material conveying bucket are also not limited to those of the above embodiments as long as gas tightness of the preheater is ensured when the material conveying bucket is attached to the preheater.

While the top cover and the bottom lid are configured to be opened by being pivoted relative to the container portion in the above-described embodiments and modifications thereof, configurations of the top cover and the bottom lid are not limited to these configurations. For example, the bottom lid may be configured so that the bottom lid has an inclination and opened by being pulled obliquely upward. When such a bottom lid is used, it is possible to prevent scrap from being caught when the bottom lid is opened, so that stable operation is achieved. In particular, when a configuration is adopted, in which the bottom lid has at least two doors that are opened downward, it is possible to almost completely eliminate the possibility that scrap is caught when the bottom lid is opened.

While in the above description of the embodiments and modifications, an example has been described, in which the top cover is opened and closed via the link mechanism by pivoting the handle portion relative to the container of the material conveying bucket, and the bottom lid is opened and closed via the link mechanism by lowering and raising the handle portion relative to the container of the material conveying bucket, the present invention is not limited to these embodiments and modifications. It suffices that opening and closing of the top cover and the bottom lid is performed by moving the handle portion in different directions relative to the container portion of the material conveying bucket. For example, a configuration may be adopted, in which the top cover is configured to be opened and closed by horizontally sliding the top cover relative to the container portion, the first relative movement is horizontal translational movement, and the second relative movement is vertical translational movement. In this case, both of the first operation and the second operation are operations of translating the crane horizontally. However, when the first relative movement is pivotal movement about the pivot shafts provided in the link mechanism as in the case of the above-described embodiments, there is an advantage that the pivotal movement (first relative movement) is accelerated by the self weight of the handle portion when the first operation of the crane is performed.

While the connection portion is provided so as to be brought into contact with the entire flange portion provided all around the periphery of the material conveying bucket, it suffices that side walls for preventing the flow of gas between the outside and the space between the material conveying bucket and the charging opening. For example, a configuration may be adopted, in which opening is partially formed for the purpose of, for example, weight reduction, as long as the side walls are provided so as to achieve a certain degree of gas tightness.

Moreover, the melting furnace of the above-described embodiments is merely an example and, needless to say, the present invention can be applied in the case of various types of melting furnaces. For example, while an example has been described, in which an alternating-current electric arc furnace with three electrodes is used as the melting furnace, the melting furnace may be a direct-current electric arc furnace. In this case, the number of electrodes may be one or two.

While the melting facility, in which the entire facility is tilted at the time of tapping slag or molten metal, has been described in the above description of the embodiments, the melting facility may be such that tapping of slag and/or molten metal is performed without tilting the melting facility. While the raw material in the above description is scrap iron by way of example, the raw material is not limited to scrap iron, that is, the melting facility may be one that is used to melt other metals.

### Description of Reference Numerals

1; melting facility
2; preheater
3; melting furnace
4, 4', 4", 400; material conveying bucket
10; preheater base
11; body portion
12; exhaust port
13, 203; connection portion
13a, 203a; seal engagement portion
14; gate
15; guide member
16; material feeding port
17; flange
20; preheater foundation
23; pusher
30; melting-furnace base
31; furnace body
32; furnace roof
33; electrode
34; material charging port
35; flange
36; tap hole
37; slag hole
39; lining
40; melting-furnace foundation
51; raw material
52; molten metal
53; slag
60; container portion
61; container
62; top cover
62a, 62b; cover member
63; bottom lid
67a, 67b, 117a, 117b; hinge portion
64; flange portion
65; sealing member
70; handle portion
71; vertical bar
72; horizontal bar
73; hanger portion
80; link mechanism
81; link unit
82; main link member
83a, 83b; first connection member
84a, 84b; second connection member
86, 87a, 87b, 111a, 111b, 112a, 112b, 115; pivot shaft
88; first sub-link member
89; second sub-link member
90a, 90b; guide pin
91a, 91b; slot
110; main shaft
113; first link member
114; slider
116a, 116b; second link member
118; stopper
122a, 122b; roller
123a, 123b; roller guide
130; second connection pipe
131; support plate
132; main pipe
133; first connection pipe
135; inlet
140; supply unit
141; surrounding seal member
142; upper cylinder portion
143; spring
144; lower cylinder portion
145; supply pipe
204; main gate portion
205; brim portion
206; pushing flange
210; upward opening door

## Claims

1. A material conveying bucket (4; 4'; 4"; 4"'; 400) for conveying raw material to be melted in a melting furnace (3) to a preheater (2) in a state where the material conveying bucket (4; 4'; 4"; 4"'; 400) is hung by a crane, the preheater (2) being configured to preheat the raw material, by heat generated in the melting furnace (3), before the raw material is melted in the melting furnace (3), the material conveying bucket (4; 4'; 4"; 4"'; 400) comprising:
a container portion (60) including: a container (61) for containing the raw material, the container (61) having an upper opening and a bottom opening; a top cover (62) configured to open and close the upper opening; and a bottom lid (63) configured to open and close the bottom opening; and
a handle portion (70) to be hung by the crane;
**characterized by**: a link mechanism (80) that is connected to the top cover (62) and the bottom lid (63) and that connects the handle portion (70) to the container portion (60) so that the handle portion (70) can move relative to the container portion (60), the link mechanism (80) having a function of opening and closing the top cover (62) when a first relative movement of the handle portion (70) relative to the container portion (60) is caused and a function of opening and closing the bottom lid (63) when a second relative movement of the handle portion (70) relative to the container portion (60) is caused, the second relative movement being different in direction from the first relative movement, wherein:
the container portion (60) includes a bucket-side engagement portion (64, 65) provided at a position such that opening and closing of the bottom lid (63) is not hindered, the bucket-side engagement portion (64, 65) having a strength enough to withstand a load exerted by the material conveying bucket (4; 4'; 4"; 4"'; 400) filled with the raw material;
the material conveying bucket (4; 4'; 4"; 4"'; 400) is configured so that the bottom lid (63) is opened and the raw material in the material conveying bucket (4; 4'; 4"; 4"'; 400) is thus discharged by causing the second relative movement of the handle portion (70) relative to the container portion (60) by lowering the crane while the material conveying bucket (4; 4'; 4"; 4"'; 400) is placed on the preheater (2) in a state where the bucket-side engagement portion (64, 65) is engaged with the preheater (2); and
the bucket-side engagement portion (64, 65) includes a flange portion (64) provided all around the container portion (60).

2. The material conveying bucket (4; 4'; 4"; 4"'; 400) according to claim 1, **characterized in that** the first relative movement is pivotal movement about a pivot shaft provided in the link mechanism (80).

3. The material conveying bucket (4; 4'; 4"; 4"'; 400) according to claim 1 or 2, **characterized in that** the second relative movement is vertical translational movement.

4. The material conveying bucket (4; 4'; 4"; 4"'; 400) according to any one of claims 1 to 3, **characterized in that** the link mechanism (80) includes a link unit (81) having: a main link member (82; 110) directly connected to the handle portion (70); a first connection member (83a, 83b) connecting between the main link member (82; 110) and the top cover (62); and a second connection member (84a, 84b; 116a, 116b) connecting between the main link member (82; 110) and the bottom lid (63).

5. The material conveying bucket (4; 4'; 4"; 4"'; 400) according to claim 4, **characterized in that**:
a horizontal cross section of the container portion (60) has a rectangular shape;
the link unit (81) is provided on an outer surface of each of two opposite sides of the container portion (60);
the bottom lid (63) includes double doors (63a, 63b) configured to open downward; and
the link unit (81) includes the two second connection members (84a, 84b; 116a, 116b) individually connecting between the main link member (82; 110) and the double doors (63a, 63b).

6. The material conveying bucket (4; 4'; 4"; 4"'; 400) according to any one of claims 1 to 5, **characterized by** being configured so that the top cover (62) is opened by causing the first relative movement of the handle portion (70) relative to the container portion (60) by lowering the crane when the material conveying bucket (4; 4'; 4"; 4"'; 400) is placed on a seat at a material filling position, at which the raw material is filled into the material conveying bucket (4; 4'; 4"; 4"'; 400).

7. The material conveying bucket (4; 4'; 4"; 4"'; 400) according to any one of claims 1 to 6, **characterized in that** the top cover (62) has a pressure regulating valve (68) configured to reduce inner pressure of the container portion (60) when pressure in the container portion (60) rises abruptly.

8. The material conveying bucket (4; 4'; 4"; 4"'; 400) according to any one of claims 1 to 7, **characterized in that** the bucket-side engagement portion (64, 65) further includes a sealing member (65), provided on a bottom surface of the flange portion (64), for maintaining gas tightness between the preheater (2) and the container portion (60).

9. The material conveying bucket (4; 4'; 4"; 4"'; 400) according to any one of claims 1 to 8, **characterized in that** the bucket-side engagement portion (64, 65) is provided at a lower end portion of the container portion (60).

10. The material conveying bucket (4; 4'; 4"; 4"'; 400) according to any one of claims 1 to 9, **characterized in that** the container portion (60) has an inlet (135) for injecting inert gas into the container (61) to displace air in the container (61) by the inert gas.

11. A melting facility (1) **characterized by** comprising:
a melting furnace (3) for melting raw material;
a preheater (2) configured to preheat the raw material to be melted by the melting furnace (3), by heat generated in the melting furnace (3), before the raw material is melted in the melting furnace (3); and
the material conveying bucket (4; 4'; 4"; 4"'; 400) according to any one of claims 1 to 10, wherein
the preheater (2) includes:
a body portion (11), into which the raw material is charged;
an exhaust port (12), provided in a side of the body portion (11), for discharging, from the body portion (11), gas that has been introduced from the melting furnace (3) and that has preheated the raw material in the body portion (11);
a gate (14), provided in an upper portion of the body portion (11), for opening and closing a charging opening, through which the raw material is charged from the material conveying bucket (4; 4'; 4"; 4"'; 400) into the body portion (11); and
a connection portion (13) including a side wall that inhibits gas from flowing between an outside and a space between the material conveying bucket (4; 4'; 4"; 4"'; 400) and the charging opening while the material conveying bucket (4; 4'; 4"; 4"'; 400) is placed at a charging position, at which the raw material is charged into the body portion (11).

12. The melting facility (1) according to claim 11, **characterized in that**
one of the material conveying bucket (4; 4'; 4"; 4"'; 400) and the preheater (2) includes a rotator (66) that functions as a guiding device for positioning between the material conveying bucket (4; 4'; 4"; 4"'; 400) and the preheater (2), and
the other of the material conveying bucket (4; 4'; 4"; 4"'; 400) and the preheater (2) includes a guide member (15) having a contact surface, with which the rotator (66) is brought into contact and on which the rotator (66) rotates or slides, at a position corresponding to a position of the rotator (66), to which the rotator (66) is brought when the material conveying bucket (4; 4'; 4"; 4"'; 400) is placed in the charging position.

13. The melting facility (1) according to claim 12, **characterized in that**:
the rotator (66) is provided on the bucket-side engagement portion (64, 65) of the material conveying bucket (4; 4'; 4"; 4"'; 400) at each of at least two of positions that are the farthest from a center of the material conveying bucket (4; 4'; 4"; 4"'; 400) in horizontal direction;
the guide member (15) is provided on the connection portion (13) of the preheater (2) at each of positions corresponding to positions, to which the rotators (66) are brought when the material conveying bucket (4; 4'; 4"; 4"'; 400) is placed in the charging position; and
the contact surfaces are inclined so as to horizontally converge in a downward direction.

14. A method of operating the melting facility (1) according to any one of claims 11 to 13, the method being **characterized by** comprising:
opening the top cover (62) of the material conveying bucket (4; 4'; 4"; 4"'; 400) by performing a first operation of the crane when the raw material is filled into the material conveying bucket (4; 4'; 4"; 4"'; 400);
closing the top cover (62) of the material conveying bucket (4; 4'; 4"; 4"'; 400) containing the raw material by performing a second operation of the crane;
opening the bottom lid (63) of the material conveying bucket (4; 4'; 4"; 4"'; 400) by performing a third operation of the crane when the raw material is charged from the material conveying bucket (4; 4'; 4"; 4"'; 400) into the body portion (11) of the preheater (2); and
closing the bottom lid (63) of the material conveying bucket (4; 4'; 4"; 4"'; 400), from which the raw material has been discharged, by performing a fourth operation of the crane.

15. The method of operating the melting facility (1) according to claim 14, **characterized in that**
each of the first operation and the third operation includes an operation of lowering the crane, and
each of the second operation and the fourth operation includes an operation of raising the crane.

## Patentansprüche

1. Materialfördergefäß (4; 4'; 4"; 4"'; 400) zum Fördern von Rohmaterial, das in einem Schmelzofen (3) geschmolzen werden soll, an einen Vorwärmer (2) in einem Zustand, in dem das Materialfördergefäß (4; 4'; 4"; 4"'; 400) an einem Kran aufgehängt wird, wobei der Vorwärmer (2) derart konfiguriert ist, um das Rohmaterial durch Wärme vorzuwärmen, die in dem Schmelzofen (3) erzeugt wird, bevor das Rohmaterial in dem Schmelzofen (3) geschmolzen wird, wobei das Materialfördergefäß (4; 4'; 4"; 4"'; 400) Folgendes umfasst:
einen Behälterteil (60), einschließlich: eines Behälters (61) zum Enthalten des Rohmaterials, wobei der Behälter (61) eine obere Öffnung und eine untere Öffnung aufweist; einer oberen Abdeckung (62), die derart konfiguriert ist, um die obere Öffnung zu öffnen und zu schließen; und eines unteren Deckels (63), der derart konfiguriert ist, um die untere Öffnung zu öffnen und zu schließen; und
einen Griffteil (70), der an dem Kran aufgehängt wird;
**gekennzeichnet durch**:
einen Linkmechanismus (80), der mit der oberen Abdeckung (62) und dem unteren Deckel (63) verbunden ist, und der den Griffteil (70) mit dem Behälterteil (60) derart verbindet, dass sich der Griffteil (70) relativ zu dem Behälterteil (60) bewegen kann, wobei der Linkmechanismus (80) eine Funktion des Öffnens und Schließens der oberen Abdeckung (62) aufweist, wenn eine erste relative Bewegung des Griffteils (70) relativ zu dem Behälterteil (60) verursacht wird, und eine Funktion des Öffnens und Schließens des unteren Deckels (63), wenn eine zweite relative Bewegung des Griffteils (70) relativ zu dem Behälterteil (60) verursacht wird, wobei sich die zweite relative Bewegung in der Richtung von der ersten relativen Bewegung unterscheidet, wobei:
der Behälterteil (60) einen Eingriffsteil (64, 65) an der Gefäßseite beinhaltet, der an einer Position bereitgestellt ist, sodass das Öffnen und Schließen des unteren Deckels (63) nicht behindert ist, wobei der Eingriffsteil (64, 65) an der Gefäßseite eine Kraft aufweist, die ausreichend ist, um einer von dem Materialfördergefäß (4; 4'; 4"; 4"'; 400), das mit dem Rohmaterial befüllt ist, ausgeübten Last standzuhalten;
das Materialfördergefäß (4; 4'; 4"; 4"'; 400) derart konfiguriert ist, dass der untere Deckel (63) geöffnet ist und das Rohmaterial in dem Materialfördergefäß (4; 4'; 4"; 4"'; 400) somit entladen wird, indem die zweite relative Bewegung des Griffteils (70) relativ zu dem Behälterteil (60) durch Senken des Krans verursacht wird, während das Materialfördergefäß (4; 4'; 4"; 4"'; 400) auf den Vorwärmer (2) in einem Zustand platziert wird, in dem der Eingriffsteil (64, 65) an der Gefäßseite in Eingriff mit dem Vorwärmer (2) gebracht wird; und
der Eingriffsteil (64, 65) an der Gefäßseite einen Flanschteil (64) beinhaltet, der um den gesamten Behälterteil (60) herum bereitgestellt ist.

2. Materialfördergefäß (4; 4'; 4"; 4"'; 400) nach Anspruch 1, **dadurch gekennzeichnet, dass** die erste relative Bewegung eine Drehbewegung um eine Drehwelle ist, die in dem Linkmechanismus (80) bereitgestellt ist.

3. Materialfördergefäß (4; 4'; 4"; 4"'; 400) nach Anspruch 1 oder 2, **dadurch gekennzeichnet, dass** die zweite relative Bewegung eine vertikale Verschiebebewegung ist.

4. Materialfördergefäß (4; 4'; 4"; 4"'; 400) nach einem der Ansprüche 1 bis 3, **dadurch gekennzeichnet, dass** der Linkmechanismus (80) eine Linkeinheit (81) beinhaltet, die Folgendes aufweist: ein Hauptlinkelement (82; 110), das direkt an dem Griffteil (70) verbunden ist; ein erstes Verbindungselement (83a, 83b), das zwischen dem Hauptlinkelement (82; 110) und der oberen Abdeckung (62) verbunden ist; und ein zweites Verbindungselement (84a, 84b; 116a, 116b), das zwischen dem Hauptlinkelement (82; 110) und dem unteren Deckel (63) verbunden ist.

5. Materialfördergefäß (4; 4'; 4"; 4"'; 400) nach Anspruch 4, **dadurch gekennzeichnet, dass**:
ein horizontaler Querschnitt des Behälterteils (60) eine rechteckige Form aufweist;
die Linkeinheit (81) an einer Außenfläche jeder der beiden gegenüberliegenden Seiten des Behälterteils (60) bereitgestellt ist;
der untere Deckel (63) Doppeltüren (63a, 63b) beinhaltet, die derart konfiguriert sind, um sich nach unten zu öffnen; und
die Linkeinheit (81) die beiden zweiten Verbindungselemente (84a, 84b; 116a, 116b) beinhaltet, die individuell zwischen dem Hauptlinkelement (82; 110) und den Doppeltüren (63a, 63b) verbunden sind.

6. Materialfördergefäß (4; 4'; 4"; 4"'; 400) nach einem der Ansprüche 1 bis 5, **dadurch gekennzeichnet, dass** dieses derart konfiguriert ist, dass die obere Abdeckung (62) durch das Verursachen der ersten relativen Bewegung des Griffteils (70) relativ zu dem Behälterteil (60) durch Senken des Krans geöffnet wird, wenn das Materialfördergefäß (4; 4'; 4"; 4"'; 400) auf einer Ablage an einer Materialbefüllungsposition platziert wird, an welcher das Rohmaterial in das Materialfördergefäß (4; 4'; 4"; 4"'; 400) eingefüllt wird.

7. Materialfördergefäß (4; 4'; 4"; 4"'; 400) nach einem der Ansprüche 1 bis 6, **dadurch gekennzeichnet, dass** die obere Abdeckung (62) ein Druckregelventil (68) aufweist, das derart konfiguriert ist, um den Innendruck des Behälterteils (60) zu reduzieren, wenn der Druck in dem Behälterteil (60) abrupt ansteigt.

8. Materialfördergefäß (4; 4'; 4"; 4"'; 400) nach einem der Ansprüche 1 bis 7, **dadurch gekennzeichnet, dass** der Eingriffsteil (64, 65) an der Gefäßseite weiter ein Dichtungselement (65) beinhaltet, das an einer unteren Fläche des Flanschteils (64) zum Aufrechterhalten einer Gasdichtheit zwischen dem Vorwärmer (2) und dem Behälterteil (60) bereitgestellt ist.

9. Materialfördergefäß (4; 4'; 4"; 4"'; 400) nach einem der Ansprüche 1 bis 8, **dadurch gekennzeichnet, dass** der Eingriffsteil (64, 65) an der Gefäßseite an einem unteren Endteil des Behälterteils (60) bereitgestellt ist.

10. Materialfördergefäß (4; 4'; 4"; 4"'; 400) nach einem der Ansprüche 1 bis 9, **dadurch gekennzeichnet, dass** der Behälterteil (60) einen Einlass (135) zum Einblasen von inertem Gas in den Behälter (61) aufweist, um Luft in dem Behälter (61) durch das inerte Gas zu verdrängen.

11. Schmelzanlage (1), **dadurch gekennzeichnet, dass** diese Folgendes umfasst:
einen Schmelzofen (3) zum Schmelzen von Rohmaterial;
einen Vorwärmer (2), der derart konfiguriert ist, um das von dem Schmelzofen (3) zu schmelzende Rohmaterial durch die in dem Schmelzofen (3) erzeugte Wärme vorzuwärmen, bevor das Rohmaterial in dem Schmelzofen (3) geschmolzen wird; und
das Materialfördergefäß (4; 4'; 4"; 4"'; 400) nach einem der Ansprüche 1 bis 10, wobei
der Vorwärmer (2) Folgendes beinhaltet:
einen Körperteil (11), in den das Rohmaterial geladen wird;
einen Auslasskanal (12), der in einer Seite des Körperteils (11) bereitgestellt ist, zum Entladen von Gas aus dem Körperteil (11), das von dem Schmelzofen (3) eingeführt worden ist, und welches das Rohmaterial in dem Körperteil (11) vorgewärmt hat;
eine Schleuse (14), die in einem oberen Teil des Körperteils (11) bereitgestellt ist, zum Öffnen und Schließen einer Ladeöffnung, durch welche das Rohmaterial aus dem Materialfördergefäß (4; 4'; 4"; 4"'; 400) in den Körperteil (11) beladen wird; und
einen Verbindungsteil (13), einschließlich einer Seitenwand, die Gas davon abhält, zwischen einer Außenseite und einem Raum zwischen dem Materialfördergefäß (4; 4'; 4"; 4"'; 400) und der Ladeöffnung zu strömen, während das Materialfördergefäß (4; 4'; 4"; 4"'; 400) an einer Ladeposition platziert wird, an welcher das Rohmaterial in den Körperteil (11) geladen wird.

12. Schmelzanlage (1) nach Anspruch 11, **dadurch gekennzeichnet, dass**
eines von dem Materialfördergefäß (4; 4'; 4"; 4"'; 400) und dem Vorwärmer (2) einen Rotator (66) beinhaltet, der als eine Führungsvorrichtung zum Positionieren zwischen dem Materialfördergefäß (4; 4'; 4"; 4"'; 400) und dem Vorwärmer (2) fungiert, und
das andere von dem Materialfördergefäß (4; 4'; 4"; 4"'; 400) und dem Vorwärmer (2) ein Führungselement (15) beinhaltet, das eine Kontaktfläche aufweist, mit welcher der Rotator (66) in Kontakt gebracht wird, und an welcher sich der Rotator (66) in einer Position entsprechend einer Position des Rotators (66) dreht oder gleitet, in welche der Rotator (66) gebracht wird, wenn das Materialfördergefäß (4; 4'; 4"; 4"'; 400) in die Ladeposition platziert wird.

13. Schmelzanlage (1) nach Anspruch 12, **dadurch gekennzeichnet, dass**:
der Rotator (66) an dem Eingriffsteil (64, 65) an der Gefäßseite des Materialfördergefäßes (4; 4'; 4"; 4"'; 400) an jeder der wenigstens zwei Positionen, die am weitesten weg von einer Mitte des Materialfördergefäßes (4; 4'; 4"; 4"'; 400) in horizontaler Richtung gelegen sind, bereitgestellt ist;
das Führungselement (15) an dem Verbindungsteil (13) des Vorwärmers (2) an jeder der Positionen, die denjenigen Positionen entsprechen, zu denen die Rotatoren (66) gebracht werden, wenn das Materialfördergefäß (4; 4'; 4"; 4"'; 400) in die Ladeposition platziert wird, bereitgestellt ist; und
die Kontaktflächen derart geneigt sind, um horizontal in einer nach unten gerichteten Richtung zusammenzulaufen.

14. Verfahren zum Betrieb der Schmelzanlage (1) nach einem der Ansprüche 11 bis 13, wobei das Verfahren **dadurch gekennzeichnet ist, dass** es Folgendes umfasst:
das Öffnen der oberen Abdeckung (62) des Materialfördergefäßes (4; 4'; 4"; 4"'; 400) durch das Durchführen eines ersten Betriebs des Krans, wenn das Rohmaterial in das Materialfördergefäß (4; 4'; 4"; 4"'; 400) eingefüllt wird;
das Schließen der oberen Abdeckung (62) des Materialfördergefäßes (4; 4'; 4"; 4"'; 400), welches das Rohmaterial enthält, indem ein zweiter Betrieb des Krans durchgeführt wird;
das Öffnen des unteren Deckels (63) des Materialfördergefäßes (4; 4'; 4"; 4"'; 400) durch das Durchführen eines dritten Betriebs des Krans, wenn das Rohmaterial von dem Materialfördergefäß (4; 4'; 4"; 4"'; 400) in den Körperteil (11) des Vorwärmers (2) geladen wird; und
das Schließen des unteren Deckels (63) des Materialfördergefäßes (4; 4'; 4"; 4"'; 400), von dem das Rohmaterial entladen worden ist, indem ein vierter Betrieb des Krans durchgeführt wird.

15. Verfahren zum Betrieb der Schmelzanlage (1) nach Anspruch 14, **dadurch gekennzeichnet, dass**
jeder des ersten Betriebs und des dritten Betriebs einen Betrieb des Senkens des Krans beinhaltet, und
jeder des zweiten Betriebs und des vierten Betriebs einen Betrieb des Anhebens des Krans beinhaltet.

## Revendications

1. Benne de transport de matériaux (4; 4'; 4" ; 4"' ; 400) pour transporter des matières premières à fondre dans un four de fusion (3) à un préchauffeur (2) dans un état où la benne de transport de matériaux (4 ; 4' ; 4" ; 4"' ; 400) est suspendue par une grue, le préchauffeur (2) étant configuré pour préchauffer les matières premières par de la chaleur générée dans le four de fusion (3) avant que les matières premières ne soient fondues dans le four de fusion (3), la benne de transport de matériaux (4 ; 4' ; 4" ; 4"' ; 400) comprenant :
une partie de conteneur (60) comprenant un conteneur (61) pour contenir les matières premières, le conteneur (61) ayant une ouverture supérieure et une ouverture inférieure ; un couvercle supérieur (62) configuré pour ouvrir et fermer l'ouverture supérieure ; et une coiffe inférieure (63) configurée pour ouvrir et fermer l'ouverture inférieure ; et
une partie de manipulation (70) à suspendre à la grue ;
**caractérisée par** :
un mécanisme de liaison (80) qui est raccordé au couvercle supérieur (62) et à la coiffe inférieure (63) et qui raccorde la partie de manipulation (70) à la partie de conteneur (60) de sorte que la partie de manipulation (70) puisse se déplacer par rapport à la partie de conteneur (60), le mécanisme de liaison (80) ayant une fonction d'ouverture et de fermeture du couvercle supérieur (62) lorsqu'un premier mouvement relatif de la partie de manipulation (70) par rapport à la partie de conteneur (60) est provoqué et une fonction d'ouverture et de fermeture de la coiffe inférieure (63) lorsqu'un second mouvement relatif de la partie de manipulation (70) par rapport à la partie de conteneur (60) est provoqué, le second mouvement relatif étant différent en direction du premier mouvement relatif, dans lequel :
la partie de conteneur (60) comprend une partie d'engagement côté benne (64, 65) disposée dans une position telle que l'ouverture et la fermeture de la coiffe inférieure (63) ne soient pas gênées, la partie d'engagement côté benne (64, 65) ayant assez de résistance pour résister à une charge exercée par la benne de transport de matériaux (4 ; 4' ; 4" ; 4'" ; 400) remplie des matières premières ;
la benne de transport de matériaux (4 ; 4' ; 4" ; 4'" ; 400) est configurée de sorte que la coiffe inférieure (63) soit ouverte et que les matières premières dans la benne de transport de matériaux (4 ; 4' ; 4" ; 4'" ; 400) soient donc déchargées en provoquant le second mouvement relatif de la partie de manipulation (70) par rapport à la partie de conteneur (60) en abaissant la grue tandis que la benne de transport de matériaux (4 ; 4'; 4" ; 4"' ; 400) est placée sur le préchauffeur (2) dans un état où la partie d'engagement côté benne (64, 65) est engagée sur le préchauffeur (2) ; et
la partie d'engagement côté benne (64, 65) comprend une partie bridée (64) disposée tout autour de la partie de conteneur (60).

2. Benne de transport de matériaux (4 ; 4' ; 4" ; 4'" ; 400) selon la revendication 1, **caractérisée en ce que** le premier mouvement relatif est un mouvement pivotant autour d'un arbre pivot disposé dans le mécanisme de liaison (80).

3. Benne de transport de matériaux (4 ; 4' ; 4" ; 4'" ; 400) selon la revendication 1 ou 2, **caractérisée en ce que** le second mouvement relatif est un mouvement de translation verticale.

4. Benne de transport de matériaux (4; 4'; 4" ; 4'"; 400) selon l'une quelconque des revendications 1 à 3, **caractérisée en ce que** le mécanisme de liaison (80) comprend une unité de liaison (81) ayant un élément de liaison principal (82 ; 110) directement raccordé à la partie de manipulation (70) ; un premier élément de raccordement (83a, 83b) établissant une liaison entre l'élément de liaison principal (82 ; 110) et le couvercle supérieur (62) ; et un second élément de raccordement (84a, 84b ; 116a, 116b) se raccordant entre l'élément de liaison principal (82 ; 110) et la coiffe inférieure (63).

5. Benne de transport de matériaux (4 ; 4' ; 4" ; 4'" ; 400) selon la revendication 4, **caractérisée en ce que** :
une section transversale horizontale de la partie de conteneur (60) a une forme rectangulaire ;
l'unité de liaison (81) est disposée sur une surface externe de chacun de deux côtés opposés de la partie de conteneur (60) ;
la coiffe inférieure (63) comprend des doubles portes (63a, 63b) configurées pour s'ouvrir vers le bas ; et
l'unité de liaison (81) comprend les deux seconds éléments de raccordement (84a, 84b ; 116a, 116b) se raccordant individuellement entre l'élément de liaison principal (82 ; 110) et les doubles portes (63a, 63b).

6. Benne de transport de matériaux (4 ; 4'; 4" ; 4'"; 400) selon l'une quelconque des revendications 1 à 5, **caractérisée en ce qu'**il est configuré de sorte que le couvercle supérieur (62) soit ouvert en provoquant le premier mouvement réactif de la partie de manipulation (70) par rapport à la partie de conteneur (60) en abaissant la grue lorsque la benne de transport de matériaux (4 ; 4' ; 4" ; 4'" ; 400) est placée sur un siège dans une position de remplissage de matériaux, où les matières premières remplissent la benne de transport de matériaux (4 ; 4' ; 4" ; 4'" ; 400).

7. Benne de transport de matériaux (4 ; 4'; 4" ; 4'"; 400) selon l'une quelconque des revendications 1 à 6, **caractérisée en ce que** le couvercle supérieur (62) a une vanne de régulation de pression (68) configurée pour réduire la pression interne de la partie de conteneur (60) lorsque la pression dans la partie de conteneur (60) augmente de manière abrupte.

8. Benne de transport de matériaux (4 ; 4'; 4" ; 4'"; 400) selon l'une quelconque des revendications 1 à 7, **caractérisée en ce que** la partie d'engagement côté benne (64, 65) comprend en outre un élément d'étanchéité (65) disposé sur une surface inférieure de la partie bridée (64) pour maintenir l'étanchéité aux gaz entre le préchauffeur (2) et la partie de conteneur (60).

9. Benne de transport de matériaux (4 ; 4'; 4" ; 4'"; 400) selon l'une quelconque des revendications 1 à 8, **caractérisée en ce que** la partie d'engagement côté benne (64, 65) est disposée sur une partie d'extrémité inférieure de la partie de conteneur (60).

10. Benne de transport de matériaux (4 ; 4'; 4" ; 4'"; 400) selon l'une quelconque des revendications 1 à 9, **caractérisée en ce que** la partie de conteneur (60) a une entrée (135) pour injecter du gaz inerte dans le conteneur (61) afin de déplacer l'air dans le conteneur (61) par le gaz inerte.

11. Installation de fusion (1) **caractérisée en ce qu'**elle comprend :
un four de fusion (3) pour faire fondre des matières premières ;
un préchauffeur (2) configuré pour préchauffer les matières premières à fondre par le four de fusion (3) par de la chaleur générée dans le four de fusion (3) avant que les matières premières ne soient fondues dans le four de fusion (3) ; et
la benne de transport de matériaux (4 ; 4' ; 4" ; 4'" ; 400) selon l'une quelconque des revendications 1 à 10, dans laquelle
le préchauffeur (2) comprend :
une partie de corps (11) dans laquelle les matières premières sont chargées ;
un orifice d'échappement (12) disposé sur un côté de la partie de corps (11) pour décharger de la partie de corps (11) du gaz qui a été introduit depuis le four de fusion (3) et qui a préchauffé les matières premières dans la partie de corps (11) ;
une porte (14) disposée dans une partie supérieure de la partie de corps (11) pour ouvrir et fermer une ouverture de chargement, à travers laquelle les matières premières sont chargées de la benne de transport de matériaux (4 ; 4' ; 4" ; 4'" ; 400) dans la partie de corps (11) ; et
une partie de raccordement (13) comprenant une paroi latérale qui empêche le gaz de s'écouler entre l'extérieur et un espace entre la benne de transport de matériaux (4 ; 4' ; 4" ; 4'" ; 400) et l'ouverture de chargement tandis que la benne de transport de matériaux (4 ; 4' ; 4" ; 4'" ; 400) est placée en position de chargement, où les matières premières sont chargées dans la partie de corps (11).

12. Installation de fusion (1) selon la revendication 11, **caractérisée en ce que**
l'un(e) de la benne de transport de matériaux (4 ; 4' ; 4" ; 4"' ; 400) et du préchauffeur (2) comprend un rotateur (66) qui joue le rôle d'un dispositif de guidage pour effectuer un positionnement entre la benne de transport de matériaux (4 ; 4' ; 4" ; 4'" ; 400) et le préchauffeur (2), et
l'autre de la benne de transport de matériaux (4 ; 4'; 4" ; 4"' ; 400) et du préchauffeur (2) comprend un élément de guidage (15) ayant une surface de contact avec laquelle le rotateur (66) est amené en contact et sur laquelle le rotateur (66) tourne ou coulisse, dans une position correspondant à une position du rotateur (66), à laquelle le rotateur (66) est amené lorsque la benne de transport de matériaux (4 ; 4' ; 4" ; 4'" ; 400) est placée en position de chargement.

13. Installation de fusion (1) selon la revendication 12, **caractérisée en ce que** :
le rotateur (66) est disposé sur la partie d'engagement côté benne (64, 65) de la benne de transport de matériaux (4 ; 4' ; 4" ; 4"' ; 400) dans chacune des au moins deux positions qui sont les plus éloignées d'un centre de la benne de transport de matériaux (4 ; 4' ; 4" ; 4'" ; 400) dans la direction horizontale ;
l'élément de guidage (15) est disposé sur la partie de raccordement (13) du préchauffeur (2) dans chacune des positions correspondant à des positions auxquelles les rotateurs (66) sont amenés lorsque la benne de transport de matériaux (4 ; 4' ; 4" ; 4'" ; 400) est placée en position de chargement ; et
les surfaces de contact sont inclinées de manière à converger horizontalement dans une direction descendante.

14. Procédé de fonctionnement de l'installation de fusion (1) selon l'une quelconque des revendications 11 à 13, le procédé étant **caractérisé en ce qu'**il comprend :
l'ouverture du couvercle supérieur (62) de la benne de transport de matériaux (4 ; 4' ; 4" ; 4'" ; 400) en effectuant une première opération de la grue lorsque les matières premières sont remplies dans la benne de transport de matériaux (4 ; 4' ; 4" ; 4'" ; 400) ;
la fermeture du couvercle supérieur (62) de la benne de transport de matériaux (4 ; 4' ; 4" ; 4'" ; 400) contenant les matières premières en effectuant une deuxième opération de la grue ;
l'ouverture de la coiffe inférieure (63) de la benne de transport de matériaux (4 ; 4' ; 4" ; 4'" ; 400) en effectuant une troisième opération de la grue lorsque les matières premières sont chargées de la benne de transport de matériaux (4 ; 4' ; 4" ; 4'" ; 400) dans la partie de corps (11) du préchauffeur (2) ; et
la fermeture de la coiffe inférieure (63) de la benne de transport de matériaux (4 ; 4' ; 4" ; 4'" ; 400) d'où les matières premières ont été déchargées, en effectuant une quatrième opération de la grue.

15. Procédé de fonctionnement de l'installation de fusion (1) selon la revendication 14, **caractérisé en ce que**
chacune de la première opération et de la troisième opération comprend une opération d'abaissement de la grue ; et
chacune de la deuxième opération et de la quatrième opération comprend une opération de soulèvement de la grue.
